# EUROPEAN PATENT APPLICATION

(11) **EP 4 742 672 A1**
(43) Date of publication of application: **13.05.2026**
(21) Application number: 24841915.2
(22) Date of filing: 18.02.2024
(51) Int. Cl.: H04N 19/30, H04N 19/176

(54) **VIDEO PROCESSING METHOD AND RELATED APPARATUS**

(30) Priority: 19.07.2023 CN 202310893708; 01.12.2023 CN 202311658707
(71) Applicant: Huawei Cloud Computing Technologies Co., Ltd., Guiyang, Guizhou, 550025 (CN)
(72) Inventor: CAI, Changli, Gui'an New District, Guiyang Guizhou, 550025 (CN); MA, Haichuan, Gui'an New District, Guiyang Guizhou, 550025 (CN); LI, Gang, Gui'an New District, Guiyang Guizhou, 550025 (CN)
(74) Representative: Maiwald GmbH
(86) International application number: PCT/CN2024/077436
(87) International publication number: WO 2025/015909

(57) **Abstract**

This application discloses a video processing method and a related apparatus. The method is applied to a video processing apparatus. The apparatus and a cloud application are disposed in a data center. A communication connection is established between the data center and a terminal device. The method includes: performing rendering to generate raw video data, where the raw video data is obtained by rendering raw model data corresponding to the raw video data, the raw model data is generated by the cloud application according to an application operation instruction sent by the terminal device through the communication connection, and the raw video data includes M rendering layers; and encoding the M rendering layers in the raw video data into i encoding layers, to generate a target video bitstream, where a first part of rendering layers in the M rendering layers are encoded into a first encoding layer, ..., and an i^{th} part of rendering layers in the M rendering layers are encoded into an i^{th} encoding layer; and M≥i≥1. In the foregoing method, layer encoding is performed based on a rendering result that has a visual attribute and that is obtained through layer rendering, so that mutual impact between layers is reduced and controllability of an image effect is enhanced.

## Description

### TECHNICAL FIELD

This application relates to the field of network technologies, and in particular, to a video processing method and a related apparatus.

### BACKGROUND

Layer coding, namely, scalable video coding (scalable video coding, SVC), is used to encode a video signal into a layered form, and output a multi-layer bitstream including a base layer and an enhance layer. When bandwidth resources are insufficient, only a base layer bitstream is transmitted and decoded. When the bandwidth resources are sufficient, an enhance layer bitstream may be transmitted and decoded to improve video decoding quality.

In related technologies, an encoder for layer encoding divides a video in terms of time, space, and quality, encodes raw video data obtained at a render side to obtain a base layer and an enhance layer, and sends, based on a network transmission capability, a video bitstream including the base layer and the enhance layer to a terminal device. A decoding module is installed on the terminal device, decodes the video bitstream, and obtains a video frame through reconstruction, and the video frame is displayed.

However, due to losses caused by data compression in rendering, encoding, and transmission processes, layers affect each other in this video processing method. Consequently, rendering content cannot be intuitively controlled by users, and user experience is affected.

### SUMMARY

This application provides a video processing method and a related apparatus, to perform layer encoding by using information obtained through layer rendering. In this way, mutual impact between layers of an image is reduced, a user can flexibly control an image rendering result, and benefits of the layer rendering are maximized. Technical solutions are as follows.

According to a first aspect, a video processing method is provided, and is applied to a video processing apparatus. The video processing apparatus and a cloud application are disposed in at least one data center. A communication connection is established between the at least one data center and a terminal device. The method includes: performing rendering to generate raw video data, where the raw video data is obtained by rendering raw model data corresponding to the raw video data, the raw model data is generated by the cloud application according to an application operation instruction sent by the terminal device through the communication connection, the raw video data includes M rendering layers, and M≥2; encoding the M rendering layers in the raw video data into i encoding layers, to generate a target video bitstream, where a first part of rendering layers in the M rendering layers are encoded into a first encoding layer, a second part of rendering layers in the M rendering layers are encoded into a second encoding layer, ..., and an i^{th} part of rendering layers in the M rendering layers are encoded into an i^{th} encoding layer; and M≥i≥1; and sending the target video bitstream to the terminal device.

It can be learned that, in a process of rendering and encoding the raw model data to generate the video bitstream, the video processing apparatus first renders the raw model data into rendered data including the M rendering layers, and correspondingly encodes a part of rendering layers in the M rendering layers into one encoding layer, so that a total of i encoding layers are encoded, to complete layer encoding. The part of rendering layers are one or more rendering layers in the M rendering layers, but are not all rendering layers in the M rendering layers. Optionally, one rendering layer in the M rendering layers may be correspondingly encoded into one encoding layer, or a plurality of rendering layers in the M rendering layers may be correspondingly encoded into one encoding layer. In this way, the layer encoding is performed by using a rendering layer obtained through layer rendering as a dimension, to reduce mutual impact between layers of an image, and avoid losses of overall image details caused by encoding and transmission. In addition, control of a user on the image can be directly reflected on a finally presented image through rendering, encoding, and transmission, so that controllability of an image effect is enhanced and user experience is improved.

According to a possible implementation of the first aspect, the first part of rendering layers are a first rendering layer in the M rendering layers, the second part of rendering layers are a second rendering layer in the M rendering layers, ..., and the i^{th} part of rendering layers are an i^{th} rendering layer in the M rendering layers. The method further includes: receiving an image effect configuration instruction, where the image effect configuration instruction is used to enable/disable an effect of a target rendering layer in the M rendering layers; and the performing rendering to generate the raw video data includes: starting/stopping, according to the image effect configuration instruction, rendering the target rendering layer, to start/stop encoding an encoding layer corresponding to the target rendering layer.

Specifically, the video processing apparatus encodes a rendering layer in the M rendering layers into an encoding layer in a one-to-one correspondence manner, and the image effect configuration instruction received by the video processing apparatus directly instructs to enable or disable an effect of a rendering layer. In this way, an adjustment instruction sent by the user for an image layer can not only be directly executed in a rendering stage, but also enable the image layer or the rendering layer to be encoded into an encoding layer corresponding to the image layer or the rendering layer in an encoding stage. This avoids losses of overall image details caused by resource status fluctuation in encoding and transmission stages when the image layer or the rendering layer is adjusted. For example, when the user enables an image layer, the image layer is rendered into a corresponding rendering layer, encoded into a corresponding encoding layer, and transmitted to the user. In addition, a video display effect is not affected in overall image quality such as a frame rate and resolution, and controllability of the user on the image is enhanced. Optionally, the user can perform an image effect configuration operation on an image effect configuration interface displayed on the terminal device, to send the image effect configuration instruction to the video processing apparatus. Optionally, an image effect adjustment instruction sent by the user may be displayed on the image effect configuration interface of the user as a selection box or a drop-down box for enabling or disabling an image layer, a selection box for clicking and selecting and dragging an effect level of an image layer, a selection box for adjusting priorities of different image layers, or the like. Optionally, an image layer name displayed on the image effect configuration interface is different from a rendering layer name corresponding to the image layer name.

According to a possible implementation of the first aspect, the method further includes: receiving an image effect configuration instruction, where the image effect configuration instruction is used to enhance/weaken an effect of a target rendering layer in the M rendering layers; and the performing rendering to generate the raw video data includes: improving/reducing, according to the image effect configuration instruction, quality of rendering the target rendering layer.

Specifically, the image effect configuration instruction received by the video processing apparatus instructs to improve or reduce quality of rendering a rendering layer. In this way, when receiving the image effect configuration instruction, the video processing apparatus may adjust, according to the instruction, rendering strength of the rendering layer in a rendering stage. In addition, in a subsequent encoding stage, encoding is performed by using a rendering layer as a dimension. Therefore, an impact of the image effect configuration instruction on the rendering layer can be directly reflected on a finally presented image through rendering, encoding, and transmission, so that the controllability of the image effect is enhanced and user experience is improved.

According to a possible implementation of the first aspect, the first encoding layer in the i encoding layers is an original base layer, another encoding layer in the i encoding layers is an original enhance layer, and the method further includes: obtaining resource status information, where the resource status information indicates a status of one or more of the following: a rendering pipeline, an encoder, the communication connection, and the terminal device; determining, based on the resource status information, that a resource status can satisfy sending of at least m original enhance layers, where m≤i-1; and reconstructing the original base layer and the m original enhance layers into a target base layer, where a first bitstream includes a bitstream corresponding to the target base layer.

In other words, on the basis of the layer encoding, with reference to status information of one or more of resources such as the rendering pipeline, the encoder, the communication connection, and the terminal device, an encoding layer is dynamically scaled by merging enhance layers or splitting a base layer. For example, when a resource status can satisfy sending of at least m enhance layers, the m enhance layers and the base layer are merged. Optionally, it may be determined, based on the resource status information, that a long-term stable resource status in a period of time can satisfy sending of a specific quantity of enhance layers, and the enhance layers and the base layers are chosen to be merged. In this way, when it is ensured that information about the encoding layers is completely transmitted, bit rate consumption caused by poor de-correlation between layers in layer rendering and layer encoding is reduced.

According to a possible implementation of the first aspect, after the reconstructing the original base layer and the m original enhance layers into the target base layer, the method further includes: determining that a resource status cannot satisfy sending of the at least m original enhance layers but can satisfy sending of at least n original enhance layers, where n<m; reconstructing the original base layer and the n original enhance layers into the target base layer; and stopping rendering an (n+2)^{th} rendering layer, an (n+3)^{th} rendering layer, ..., and an (m+1)^{th} rendering layer.

In other words, on the basis of the layer encoding, with reference to status information of one or more of resources such as the rendering pipeline, the encoder, the communication connection, and the terminal device, an encoding layer is dynamically scaled by merging enhance layers or splitting a base layer. For example, after it is confirmed that a resource status can satisfy sending of a plurality of enhance layers and the enhance layers and the encoding layer are merged, in other words, a current base layer is already a base layer obtained by merging the enhance layers, if it is determined, based on the resource status information, that a resource status can only satisfy sending of fewer enhance layers, for example, the m original enhance layers (namely, initial and unmerged enhance layers) can be sent previously, and only n enhance layers can be sent now, where n<m, a system reconstructs the original base layer and the n enhance layers into the target base layer, in other words, splits the new base layer obtained by merging the m enhance layers, to obtain the foregoing target base layer and m-n layers. Optionally, it may be determined, based on the resource status information, that a long-term stable resource status in a period of time can satisfy sending of a specific quantity of enhance layers, and the enhance layers and the base layers are chosen to be merged. In this way, when it is ensured that information about the encoding layers is completely transmitted, bit rate consumption caused by poor de-correlation between layers in layer rendering and layer encoding is reduced.

According to a possible implementation of the first aspect, the method further includes: estimating resource occupation information and/or image effect information according to the image effect configuration instruction, where the resource occupation information is used to describe a resource occupation status of the terminal device or the communication connection after the raw video data is encoded according to the image effect configuration instruction, and the image effect information is used to describe an image effect displayed on the terminal device after the raw video data is encoded according to the image effect configuration instruction; and sending the resource occupation information and/or the image effect information to the terminal device.

In other words, because resource capabilities of the rendering pipeline, the encoder, the communication connection, and the terminal device are fixed, when receiving the image effect configuration instruction, the video processing apparatus can estimate, based on a configuration indicated by the instruction and various resource status information, a resource occupation status, for example, CPU usage, GPU usage, memory usage, and bandwidth usage, of a video processing system in a current resource status when the image effect configuration instruction is applied, and send estimation information to the terminal device. Optionally, the estimation information is displayed on a resource configuration interface provided for the user. When the image effect configuration instruction received by the video processing apparatus indicates that when an image effect configuration is greatly improved, a resource status is insufficient to support the effect configuration, some enhance layers are discarded in layer encoding in a short period of time, resulting in losses of some image details. For example, the user sets a low priority for a water-ripple effect layer in the rendering layer. In this case, when a bit rate is increased due to improvement of another image effect configuration with a high priority and bandwidth cannot support sending of an enhance layer with a low priority, the water-ripple effect layer is preferentially discarded in layer encoding and transmission processes. In this case, the image effect information may be described as a water-ripple effect being weakened or a water-ripple effect being disabled. Optionally, the estimation information is displayed on the resource configuration interface provided for the user.

According to a second aspect, a video processing method is provided, and is applied to a video processing apparatus. The method includes: receiving a target video bitstream, where the target video bitstream is generated by performing encoding on raw video data, the raw video data includes M rendering layers, the target video bitstream includes at least one encoding layer, the at least one encoding layer includes a base layer and/or at least one enhance layer, an i^{th} encoding layer in the target video bitstream is obtained by encoding a part of rendering layers in the M rendering layers, M≥2, and M≥i≥1; and decoding the i^{th} encoding layer into the part of rendering layers corresponding to the i^{th} encoding layer, to decode the target video bitstream.

Specifically, the video processing apparatus is configured to decode the target bitstream, where the target bitstream is generated through layer rendering and layer encoding, and an encoding layer in the layer encoding of the target bitstream is obtained by encoding a part of rendering layers in rendering layers obtained through layer rendering. In other words, the layer encoding is performed by using the rendering layer obtained through layer rendering as a dimension. Further, a decoder is built in the video processing apparatus, and the decoder decodes the received encoding layer into a corresponding part of rendering layers, to decode the target video bitstream. Optionally, the part of rendering layers may include one or more rendering layers in the M rendering layers, but do not include all the rendering layers. Optionally, the video processing apparatus is located in a terminal device of a user.

According to a possible implementation of the second aspect, the method further includes: sending resource status information, where the resource status information is used to determine that a resource status can satisfy sending of at least m original enhance layers, m≤M-1, the resource status information includes status information of the terminal device, and the status information of the terminal device includes one or more of the following: CPU usage, layer decoding overheads, and layer decoding latency.

Specifically, the video processing apparatus collects and sends the resource status information from the terminal device, where the resource status information includes one or more of the following: the CPU usage, the layer decoding overheads, and the layer decoding latency. Optionally, the video processing apparatus sends, through the communication connection, the resource status information to another video processing apparatus that performs encoding and rendering. In this way, the another video processing apparatus can confirm, based on the resource status information, that a resource status can satisfy sending of the at least m original enhance layers.

According to a third aspect, a video processing apparatus is provided. The video processing apparatus has a function of implementing the video processing method in the first aspect. The video processing apparatus includes at least one module. The at least one module is configured to implement the video processing method provided in the first aspect.

According to a fourth aspect, a video processing apparatus is provided. The video processing apparatus has a function of implementing the video processing method in the second aspect. The video processing apparatus includes at least one module. The at least one module is configured to implement the video processing method provided in the second aspect.

According to a fifth aspect, a computing device cluster is provided. The computing device cluster includes at least one computing device. Each computing device includes a processor and a memory.

A processor of the at least one computing device is configured to execute instructions stored in a memory of the at least one computing device, to enable the computing device cluster to perform the video processing method according to the first aspect, or perform the video processing method according to the second aspect.

According to a sixth aspect, a computer program product including instructions is provided. When the instructions are run by a computing device cluster, the computing device cluster is enabled to perform the video processing method according to the first aspect, or perform the video processing method according to the second aspect.

According to a seventh aspect, a computer-readable storage medium is provided, and includes computer program instructions. When the computer program instructions are executed by a computing device cluster, the computing device cluster performs the video processing method according to the first aspect, or performs the video processing method according to the second aspect.

Technical effects achieved in the third aspect to the seventh aspect are similar to the technical effects achieved by using corresponding technical means in the first aspect and the second aspect. Details are not described herein again.

### BRIEF DESCRIPTION OF DRAWINGS

To describe technical solutions in embodiments of the present invention more clearly, the following briefly introduces accompanying drawings needed for describing the embodiments. It is clear that the accompanying drawings in the following descriptions show some embodiments of the present invention, and a person of ordinary skill in the art may further derive other drawings from these accompanying drawings without creative efforts.
FIG. 1 is a diagram of an architecture of a video processing system according to an embodiment of this application;
FIG. 2 is a diagram of an architecture of another video processing system according to an embodiment of this application;
FIG. 3 is a schematic flowchart of a video processing method according to an embodiment of this application;
FIG. 4 is a diagram of an architecture of an encoding module according to an embodiment of this application;
FIG. 5a to FIG. 5e each are a diagram of a cloud application configuration interface according to an embodiment of this application;
FIG. 6a to FIG. 6c each are a diagram of an implementation of layer encoding according to an embodiment of this application;
FIG. 7a to FIG. 7c each are a diagram of an architecture of an encoding module according to an embodiment of this application;
FIG. 8 is a diagram of an architecture of another video processing system according to an embodiment of this application;
FIG. 9 is a schematic flowchart of a video processing method according to an embodiment of this application;
FIG. 10 is a diagram of an architecture of another video processing system according to an embodiment of this application;
FIG. 11 is a diagram of an architecture of another video processing system according to an embodiment of this application;
FIG. 12 is a diagram of a structure of a video processing apparatus according to an embodiment of this application;
FIG. 13 is a diagram of a structure of a computing device according to an embodiment of this application;
FIG. 14 is a diagram of a structure of a computing device cluster according to an embodiment of this application; and
FIG. 15 is a diagram of a network connection relationship of a computing device according to an embodiment of this application.

### DESCRIPTION OF EMBODIMENTS

The following clearly describes technical solutions in embodiments of the present invention with reference to accompanying drawings. It is clear that the described embodiments are merely a part rather than all of embodiments of the present invention. All other embodiments obtained by a person of ordinary skill in the art based on embodiments of the present invention without creative efforts shall fall within the protection scope of the present invention.

Mentioning an "embodiment" in the specification means that a particular characteristic, structure, or feature described with reference to the embodiment may be included in at least one embodiment of the present invention. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

Some terms and related technologies in the present invention are first described with reference to the accompanying drawings, to help a person skilled in the art have a better understanding.

Layer rendering (layer rendering): An entire rendering process is divided into several layers. Each layer is separately rendered and a corresponding rendering result is saved. In the layer rendering, different image elements or data is respectively saved in different layers and then combined to form a final rendering effect. For example, a foreground layer, a midground layer, and a background layer may be obtained through division based on rendering content. For another example, a color layer, a highlight layer, a shadow layer, a reflection layer, a refraction layer, a light-emitting layer, and the like may be obtained through division based on a rendering visual attribute. For another example, layering may be performed based on visual saliency. Proper layer rendering not only improves a speed, but also facilitates subsequent adjustment of various effects.

Layer coding (scalable video coding, SVC): Layer coding is also called scalable video coding or hierarchical video coding, is scalable and layerable, and may perform division in terms of frame rate, resolution, and quality. One encoding may output a multi-layer bitstream, including a base layer and an enhance layer, which are applicable to different terminals and network conditions. The base layer occupies little bandwidth resources to ensure basic video quality. After the base layer is combined with the enhance layer, a better frame rate, better resolution, or better quality may be obtained. Scalability of SVC coding is divided into time domain scalability, space domain scalability, and quality scalability. The time domain scalability refers to decomposing a video stream into information representing different frame rates, the space domain scalability refers to decomposing a video stream into information representing different resolution, and the quality scalability refers to decomposing pixel values into different levels.

Base layer (base layer): The base layer is data of the lowest layer in layer encoding, includes basic information of a video, for example, resolution, a frame rate, and a color, and may enable a decoder to obtain main content of the video through decoding normally, but quality of the video may be low. Data of the base layer may be decoded independently or combined with data of another enhance layer to improve the quality, resolution, or frame rate of the video. The data of the base layer usually occupies a low bit rate, and is suitable for transmission in a network with limited bandwidth or play on a terminal with low performance.

Enhance layer (enhance layer): The enhance layer is data other than the data of the lowest layer in the layer encoding, includes additional information of the video, for example, a higher frame rate, higher resolution, and higher quality, and may be combined with the data of the base layer to improve performance and experience of the video. Data of the enhance layer cannot be decoded independently, and needs to depend on the data of the base layer or data of another enhance layer. The data of the enhance layer may be dynamically adjusted based on different network conditions, terminal capabilities, or user requirements to implement scalability and adaptability of the video. There may be a plurality of pieces of data of the enhance layer to form different layers, and each layer may correspond to a time domain dimension, a space domain dimension, or a quality dimension.

Rendering pipeline: The rendering pipeline is a process of converting three-dimensional (three-dimensional, 3D) scene data into a two-dimensional (two-dimensional, 2D) image, and is a core part of real-time graphics. The rendering pipeline usually includes a plurality of stages, and each stage performs specific processing on input data and transfers an output to a next stage. The rendering pipeline usually includes main stages such as an application stage, a geometry stage, a rasterization stage, and a fragment stage.

Before a video encoding method provided in embodiments of the present invention is described in detail, an application scenario of embodiments of the present invention is first described.

A layer rendering technology is widely used in processes such as game production, film and television special effect production, and animation production. There are a plurality of forms of layer rendering. For example, a foreground layer, a midground layer, and a background layer may be obtained through division based on rendering content. For another example, a color layer, a highlight layer, a shadow layer, a reflection layer, a refraction layer, a light-emitting layer, and the like may be obtained through division based on a rendering visual attribute. Layer encoding refers to performing division in terms of time, space, or quality, and outputting a multi-layer bitstream including a base layer and an enhance layer. Data of the base layer may enable a decoder to completely and normally obtain basic video content through decoding, to ensure that a decoder side receives, when a channel is limited or a channel environment is complex, a smooth video image that can be normally watched. When a channel environment is good or channel resources are abundant, data of the enhance layer may be transmitted to improve video quality.

Video encoding is used to compress a raw video, so that a size or a bit rate of video data is reduced without affecting quality of the video data in human visual perception. An encoding service is constructed based on a cloud computing service or a physical server of a vendor. When the encoding service is constructed based on the cloud computing service, high costs of a user in purchasing, building, and managing encoding software and hardware may be reduced, and complexities such as configuration optimization and encoding parameter adaptation are avoided. In addition, with an elastic scaling feature of a cloud service, an actual encoding service requirement can be satisfied.

In application scenarios such as a cloud game and a digital human, a main procedure from receiving instructions to layer rendering, layer encoding, and transmission is as follows: A user sends signaling data via a terminal, where the signaling data is a game character manipulation instruction, a digital human action instruction, and the like. An application generates model data based on the signaling data, and sends the model data to a rendering device for rendering, to obtain raw video data, in other words, generate a raw video frame. Then, an encoder is used to encode the raw video data to obtain an encoded video bitstream, and the video bitstream is transmitted to a user side device by using a streaming protocol. In this way, a decoding module installed on the user side device decodes the received video bitstream, and the user side device displays the decoded video bitstream. In this process, rendering may be implemented through layer rendering, to be specific, the rendering device separately renders raw model data based on layers such as a color layer, a highlight layer, a shadow layer, a reflection layer, a refraction layer, and a light-emitting layer. Encoding may be implemented through layer encoding, to be specific, the encoder performs layer encoding on the raw video data in terms of time, space, or quality to obtain a base layer and at least one enhance layer, and selectively transmits the base layer and the at least one enhance layer to a user side based on a network status. Finally, a terminal device 20 performs layer decoding to obtain and display the video frame.

However, in related technologies, when layer rendering and layer encoding are performed on a video, layer encoding and network transmission affect an effect of the layer rendering. The layer rendering technology enhances a possibility of controlling and adjusting effects of different layers later. However, after one base layer and at least one enhance layer are obtained through layer encoding, due to factors such as a network status, not all enhance layers are transmitted during transmission. As a result, losses of rendering content may be caused, and computing resources consumed in a rendering process are wasted. In addition, when a layer of image fluctuates, an effect of another layer is affected. In addition, when layer rendering is performed locally, the user can intuitively adjust an image based on a visual attribute. For example, in a local application that provides fine image control, if the user inputs an instruction to enable a highlight effect, the highlight effect may be immediately presented in the image without being affected by an encoding scheme or a network status. However, when a rendering side is separated from the user side, for example, layer rendering occurs on a cloud or a server of an application vendor, experience on the user side cannot be consistent with that on the rendering side. In other words, when the user expects to adjust an effect of a visual layer based on an intuitive visual attribute, an overall visual effect of an image may be affected due to encoding or network fluctuation. As a result, it is difficult for the user to perform subjective judgment, and experience is poor.

Based on this, an embodiment of the present invention provides a video processing method. In the method, layer encoding is performed by using content obtained through layer rendering, to avoid mutual impact between content of different layers during full-frame encoding, match rendering quality and encoding quality, reduce resource waste, and enhance image stability. In comparison with a conventional video processing solution, a coupling degree between different content is reduced, so that when complexity of a piece of content increases, quality of other content does not fluctuate sharply. In addition, dynamic scaling may be further performed on an encoding layer based on a current resource status of a video processing system, to save resources, reduce information redundancy caused by layer rendering and layer encoding, and improve user experience as a whole while improving rendering quality and encoding quality.

It should be understood that the foregoing example video processing scenario is intended to describe the technical solutions in embodiments of the present invention more clearly, and does not constitute a limitation on the technical solutions provided in embodiments of the present invention. A person of ordinary skill in the art may learn that, with emergence of a new video processing scenario, the technical solutions provided in embodiments of the present invention are also applicable to similar technical problems.

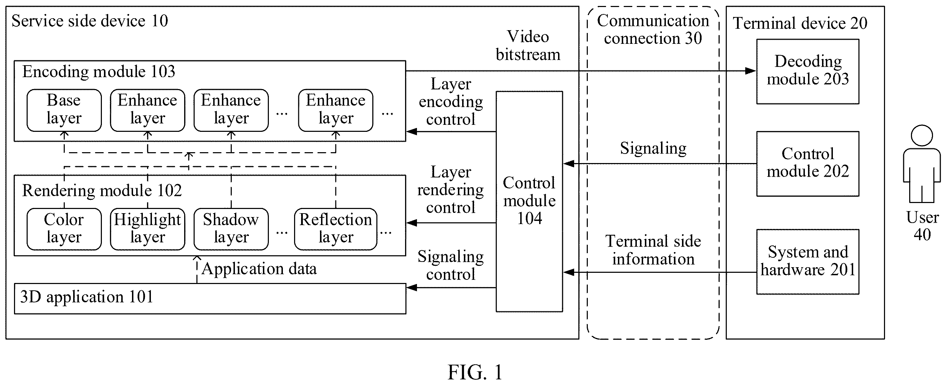

FIG. 1 is a diagram of an architecture of a video processing system according to an embodiment of the present invention. As shown in FIG. 1, the video processing system includes a service side device 10, a terminal device 20, and a communication connection 30. The service side device 10 includes a 3D application 101, a layer rendering module 102, an encoding module 103, and a control module 104. The terminal device 20 includes a system and hardware 201, a control module 202, and a decoding module 203. The service side device 10 and the terminal device 20 may communicate with each other through the communication connection 30. In this way, a user uses an application like a cloud game or a digital human, controls the application in real time, and displays a real-time image on the terminal device 20.

In an embodiment provided in the present invention, the user 40 uses the 3D application 101 by using an application program installed on the terminal device 20 like a personal computer or a smartphone, or uses the 3D application 101 by using a web page. The application 101 may be a digital human application, a cloud game application, or the like. This is not limited in the present invention. The 3D application 101 may be replaced with a 2D application. This is not limited in the present invention.

The following uses a cloud game application service scenario as an example to describe a video processing method. As an image and video transmitting end of a cloud game, the service side device 10 receives an operation instruction from the user 40, for example, a game operation instruction for controlling a game character to perform different actions or move in a scene, to generate raw model data, and transmits the raw model data to the rendering module 102 for layer rendering. A plurality of rendering layers are generated in a layer rendering process. Then, the rendering layers obtained by the rendering module 102 through rendering are integrated into raw video data, where the raw video data includes a frame-level image, namely, a raw video frame generated by the rendering module 102 in real time. The encoding module encodes the video frame generated by the rendering module into a base layer and an enhance layer in a unit of frame. For example, when a spatially scalable layer encoding scheme is used, the encoding module 103 encodes a plurality of raw video frames to generate a plurality of images of different resolution. A low-resolution image is obtained by encoding a base layer bitstream, and an enhance layer bitstream is added on this basis, so that the decoding module 203 in the terminal device 20 can obtain a high-resolution image through decoding. In this way, the raw video data is encoded into a binary video bitstream by using a video encoder on a service side. The video bitstream is transmitted to the terminal device 20 through the communication connection 30. The decoding module 203 is installed on the terminal device 20, and decodes the video bitstream to obtain reconstructed video data. The reconstructed video data includes a plurality of reconstructed video frames. In layer encoding, when network bandwidth fluctuates, encoding layers of different quantities and layers are selected to be sent based on a requirement and a capability of a receiver, so that the receiver obtains video signals of different quality or resolution through decoding based on the received encoding layers.

The raw model data and rendered data are inevitably compressed in rendering, encoding, and transmission processes. In addition, losses during data compression is completely determined by the encoder because content is not sensed during encoding. Consequently, quality of different content of an image is mutually affected due to direct content overlapping and indirect bit rate competition in this process. For example, a text of the image overlaps a background. Even if the text does not change among a plurality of frames, when texture complexity or motion intensity of the background that overlaps the text increases, the text becomes blurred, and user experience deteriorates.

For the foregoing problem, an embodiment of the present invention provides a video processing method. In the method, layer encoding is performed by using content obtained through layer rendering, to avoid mutual impact between content of different layers during full-frame encoding, match rendering quality and encoding quality, reduce resource waste, and enhance image stability. In comparison with a conventional video processing solution, a coupling degree between different content is reduced, so that when complexity of a piece of content increases, quality of other content does not fluctuate sharply. In this way, an encoding phase becomes a function that can be adjusted and controlled by an application user and an application developer. A rendering effect set by the application user may not only be fed back to the encoding phase, but also penetrate into a rendering part. Therefore, computing power of rendering, encoding, and a network can be matched.

In addition, when the video processing apparatus implemented based on layer rendering and layer encoding processes video data, the following problem may exist: Both the layer rendering and the layer encoding have some disadvantages in de-correlation. The layer encoding needs higher encoding complexity and a higher bit rate. Because the layer encoding needs to perform different encoding processing, for example, quantization, transformation, and entropy encoding, on information of each layer, synchronization and compatibility between layers further need to be ensured. In addition, the layer encoding further introduces additional redundant information, for example, correlation and dependency between layers and redundancy encoding within a layer, resulting in an increase in a bit rate after encoding. However, an image obtained through layer rendering has strong correlation, for example, an association between a color and a texture, or an impact between a depth and light. Consequently, the layer encoding or the layer rendering each wastes a specific bit rate.

For the foregoing problem, an embodiment of the present invention provides a video processing method. When performing layer encoding on raw video data, an encoding module dynamically merges and decomposes encoding layers, so that a bit rate can be saved to a maximum extent when a resource status is stable.

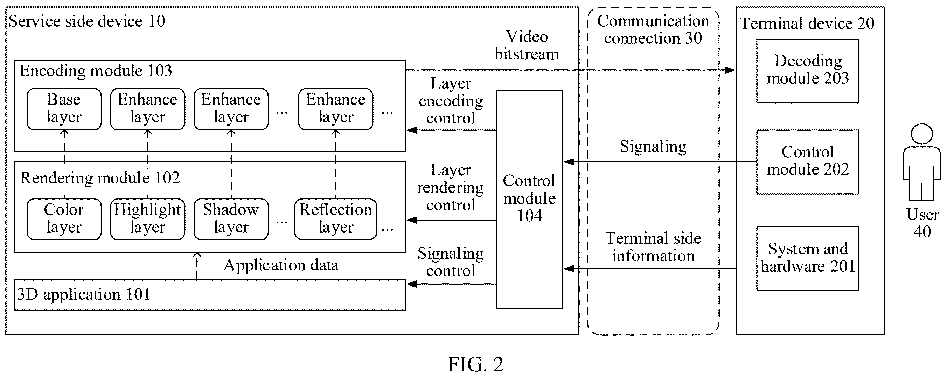

FIG. 2 is a diagram of an architecture of a video processing system according to an embodiment of the present invention. As shown in FIG. 2, the video processing system includes a service side device 10, a terminal device 20, and a communication connection 30. The service side device 10 includes a 3D application 101, a layer rendering module 102, an encoding module 103, and a control module 104. The terminal device 20 includes a system and hardware 201, a control module 202, and a decoding module 203. The service side device 10 and the terminal device 20 may communicate with each other through the communication connection 30. In this way, a user uses an application like a cloud game or a digital human, controls the application in real time, and displays a real-time image on the terminal device 20.

In an embodiment provided in the present invention, the user 40 uses the 3D application 101 by using an application program installed on the terminal device 20 like a personal computer or a smartphone, or uses the 3D application 101 by using a web page. The application 101 may be a digital human application, a cloud game application, or the like. This is not limited in the present invention. The 3D application 101 may be replaced with a 2D application. This is not limited in the present invention.

The following uses a cloud game application service scenario as an example to describe a video processing method. As an image and video transmitting end of a cloud game, the service side device 10 receives an operation instruction from the user 40, for example, a game operation instruction for controlling a game character to perform different actions or move in a scene, to generate raw model data, and transmits the raw model data to the rendering module 102 for layer rendering. In this process, the service side device 10 configures and determines a rendering sequence and rendering quality of each rendering layer. The configuration may be preset in the system. For example, an original template is preset in the system, and initial configuration is performed based on user hardware and a network status. Alternatively, the configuration may be manually configured by the user. For example, the user sets to enable or disable an image effect, adjusts a quality level of an image effect, or sets priorities of different image effects. For another example, the user selects a set of rendering configuration from a rendering template library provided by the application. Alternatively, a service side may adaptively adjust a rendering configuration in real time based on information such as a network status and a hardware status. This is not limited in the present invention. Then, the rendering module 102 can adjust a specific rendering effect for a rendering layer based on the configuration sent by the user 40 or the configuration preset in the system. For example, in a scenario in which the user manually configures the configuration, when the user 40 inputs an image control instruction for enhancing a highlight effect, the rendering module 102 correspondingly improves rendering intensity of a highlight layer.

In this way, the rendering module 102 obtains a plurality of rendering layers by rendering the raw model data, to obtain raw video data, and sends the raw video data to the encoding module 103. The encoding module 103 encodes the rendering layers in the raw video data into encoding layers one by one. To be specific, for example, a color layer is encoded into a base layer, a highlight layer is encoded into an enhance layer, a shadow layer is encoded into another enhance layer, and a reflection layer is encoded into another enhance layer.... At this time, the enhance layers obtained by encoding the highlight layer and the like are superimposed on the base layer obtained by encoding the color layer, so that the decoding module 203 in the terminal device 20 can obtain a high-resolution image through decoding. In this way, layer encoding is performed on the raw video data by a video encoder on the service side by using information obtained through layer rendering, to generate a binary video bitstream. The video bitstream is transmitted to the terminal device 20 through the communication connection 30. The decoding module 203 is installed on the terminal device 20, and decodes the video bitstream to obtain reconstructed video data. The reconstructed video data includes a plurality of reconstructed video frames. The encoding module in this embodiment performs the layer encoding by using the information obtained through layer rendering, so that when encoding layers of different quantities and layers are sent through layer encoding, mutual impact between layers is reduced, and a case in which a large quantity of image quality details of an entire video are lost due to a change of a layer does not occur. In addition, a rendering effect set by the user may be fed back to an encoding phase and penetrate into a rendering part, and a rendering layer corresponding to the encoding layer can be controlled based on a subjectively perceptible image configuration, so that a requirement of the user for controlling an image effect and quality in scenarios such as cloud games is satisfied.

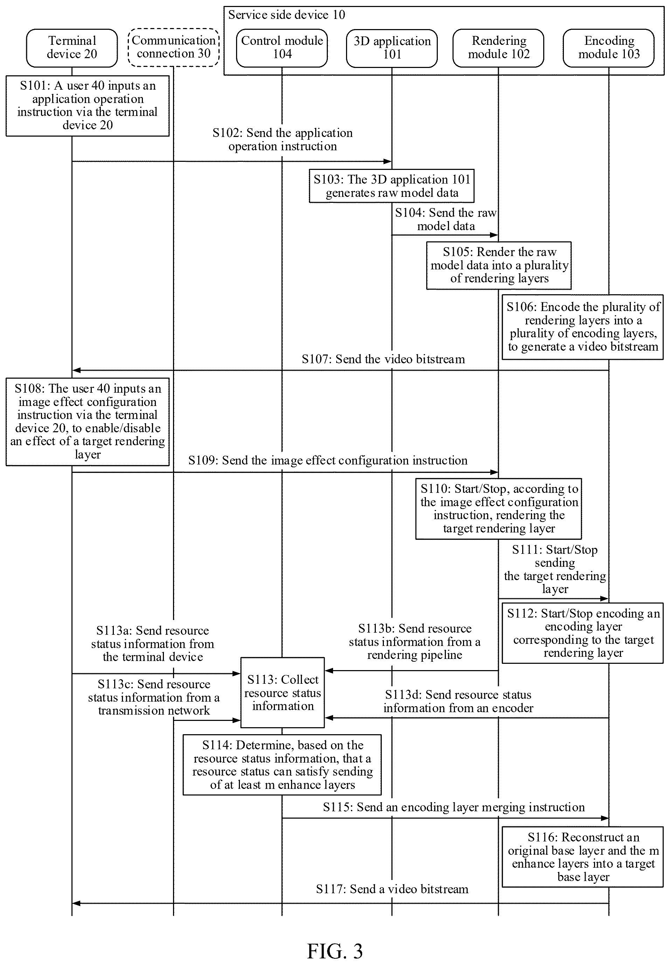

Based on the video processing system architecture in FIG. 2, the following describes in detail a video processing method provided in embodiments of the present invention with reference to FIG. 3 by using a cloud game application service scenario as an example.

FIG. 3 is a schematic flowchart of a video processing method according to an embodiment of the present invention. As shown in FIG. 3, the method includes but is not limited to the following steps:
S101: A user 40 inputs an application operation instruction via a terminal device 20.

The user 40 inputs the application operation instruction via the terminal device 20. For example, the user 40 is a user of an 3D application 101, namely, a cloud game player. The terminal device 20 is, for example, a device like a personal computer or a smartphone. The 3D application 101 may be an application program installed on the terminal device 20, or a page of the 3D application 101 can be accessed by using a browser of the terminal device 20. This is not limited in the present invention. The application operation instruction may be used to control a game character to move, control a game character to release a skill, trigger a game cutscene, or the like. The application operation instruction may be triggered by a touchscreen touch, a mouse click, a keyboard input, or the like. This is not limited in the present invention.

S102: The terminal device 20 sends the application operation instruction.

Specifically, the terminal device 20 encapsulates the application operation instruction into a data packet and sends the data packet to a service side device 10 through a communication connection 30. Specifically, the communication connection 30 may be the internet, and the service side device may be provided by a physical server, or may be provided by a data center. Further, there may be one or more physical servers or data centers. Alternatively, the service side device may be provided by a cloud computing resource like a virtual machine or a container. In another embodiment provided in the present invention, the service side device 10 may refer to a set of function units implemented by using a software function, for example, include code running on a plurality of hosts/virtual machines/containers. This is not limited in the present invention.

S103: The 3D application 101 generates raw model data.

For example, the 3D application 101 is a cloud game application, and the cloud game application generates the raw model data based on a game operation instruction sent by the user 40. Optionally, the raw model data may include information such as geometry, topology, color, texture, and animation. Optionally, in an embodiment provided in the present invention, the raw model data may be scene graphics data or animation data. The scene graphics data includes information such as object, light, material, and texture in a game or an animation, and is used to generate a visual effect in three-dimensional space. The scene graphics data may be used to convert, by using a graphics rendering pipeline, vertex coordinates into pixels on a screen, and then the pixels are shaded by using a shader, and finally output as a video. The animation data includes motion information of a character, an object, a special effect, and the like in a game or an animation, and is used to generate a dynamic effect. The animation data may be used to bind a skeleton of the character to a grid by using skeletal animation, and then a posture of each frame is calculated through interpolation, and finally output as a video. The raw model data may be stored in different formats, for example, OBJ, FBX, and GLTF. This is not limited in the present invention. In another embodiment provided in the present invention, the 3D application may be replaced with a 2D application, in other words, the raw model data may be two-dimensional or three-dimensional. This is not limited in the present invention. Specifically, when an instruction received by the cloud game is a game character control instruction, the raw model data may include model data of the game character performing a corresponding action and model data of a background animation. When an instruction received by the cloud game is a cutscene trigger instruction, the raw model data may include model data of a cutscene of a fixed duration, for example, include appearance model data that is generated based on a character appearance customized by a game user and bone driven data, which are combined for generating raw model data of a character. A trigger condition for generating the raw model data and a generation manner and content of the raw model data are not limited in the present invention.

S104: The 3D application 101 sends the raw model data.

For example, the 3D application 101 sends the foregoing raw model data to a rendering module 102 for rendering in a next step, to generate a video image that can be presented.

S105: The rendering module 102 renders the raw model data into a plurality of rendering layers.

First, the rendering module 102 may layer objects in a scene according to a specific standard. Optionally, the objects in the scene may be divided into a foreground layer, a midground layer, and a background layer based on rendering content. Specifically, if the 3D application 101 is a digital human application, the objects in the scene may be divided into a skin layer, an eye layer, a mouth shape layer, an expression layer, a hair layer, and an accessory layer based on rendering content. Alternatively, the objects in the scene may be layered with reference to the embodiment in FIG. 2. FIG. 2 is a diagram of a layer rendering manner according to an embodiment of the present invention. As shown in the figure, the rendering module 102 divides rendering content into the color layer, the highlight layer, the shadow layer, the reflection layer, the refraction layer, the light-emitting layer, and the like based on the visual attribute. Then, independent rendering configuration is performed on each rendering layer, including a renderer, a rendering parameter, a rendering channel, and the like. Finally, rendering is performed on each rendering layer to obtain a rendered image of each rendering layer.

The rendering module 102 may also be referred to as a rendering pipeline. Optionally, the rendering module 102 may include one or more of the following: a ray tracing module, a rasterization module, and a shader module, and may further include one or more of the following: a vertex processing module, a texture mapping module, an ambient occlusion rendering module, a high dynamic range rendering module, and a post-processing module. Specifically, the rendering module may further include one or more of rendering modules with specific functions, for example, a particle rendering module, a light rendering module, a shadow rendering module, and a water-ripple rendering module. This is not limited in the present invention.

S106: An encoding module 103 encodes the plurality of rendering layers into a plurality of encoding layers, to generate a video bitstream.

The encoding module 103 encodes the plurality of rendering layers generated by the rendering module 102 in step S105 into the plurality of encoding layers. Specifically, the encoding module 103 encodes one or more rendering layers into one encoding layer, to generate the video bitstream including the plurality of encoding layers. For example, when the rendering layers are divided into a color layer, a highlight layer, a shadow layer, a reflection layer, a refraction layer, and a light-emitting layer, the encoding module 103 may encode the color layer into a base layer, encode the highlight layer into a first enhance layer, encode the shadow layer into a second enhance layer.... Optionally, the encoding module 103 may alternatively encode the color layer and the shadow layer into a base layer, encode the highlight layer into a first enhance layer, and encode the reflection layer and the refraction layer into a second enhance layer. For another example, when the game is a soldier fighting game, and a rendering image is soldiers fighting on a grassland, the rendering layers may be divided into a character layer (including the soldiers), a background layer (including the grassland), and a text layer (including a fighting broadcast). The encoding module 103 may encode the character layer into a first base layer, and encode the background layer into a second base layer, so that a user side can present characters and a background to ensure a complete game image, and the like.

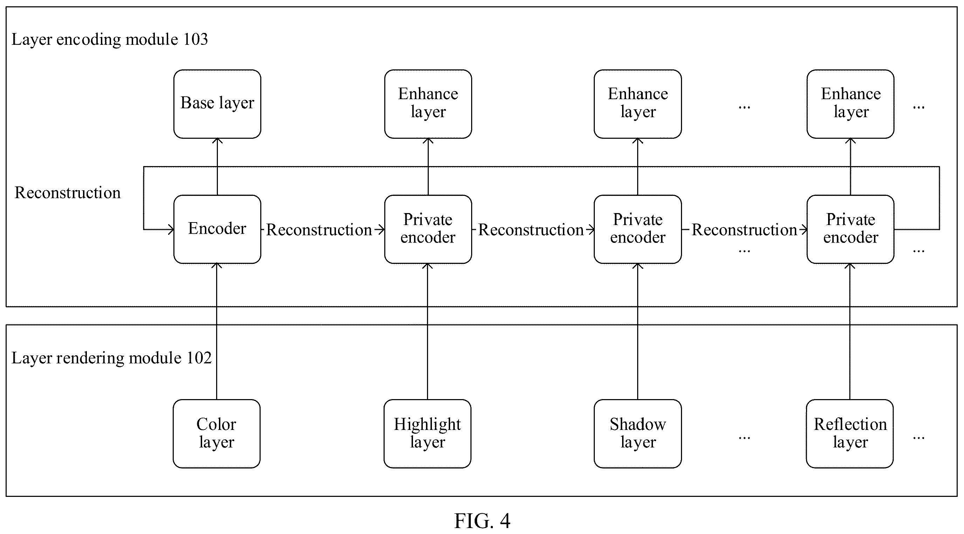

For an embodiment of the encoding module 103 configured to encode the plurality of rendering layers into the plurality of encoding layers, refer to FIG. 4. FIG. 4 is a diagram of an encoder in a video processing apparatus according to an embodiment of the present invention. As shown in FIG. 4, a result of rendering the highlight layer is transmitted to the encoder and is encoded into a base layer, and a result of rendering from the shadow layer to the reflection layer is transmitted to the encoder and is encoded into an enhance layer. The shadow layer is used as an example. The encoder subtracts a reconstruction value of an encoder of a previous layer from a rendering video frame of a current layer to obtain a residual, and encodes the residual into an enhance layer. This process is cyclically performed on a subsequent layer to obtain a plurality of enhance layers.

S107: The encoding module 103 sends the video bitstream.

Specifically, the video bitstream includes the plurality of encoding layers generated by the encoding module 103 in step S106.

S108: The user 40 inputs an image effect configuration instruction via the terminal device 20, to enable/disable an effect of a target rendering layer.

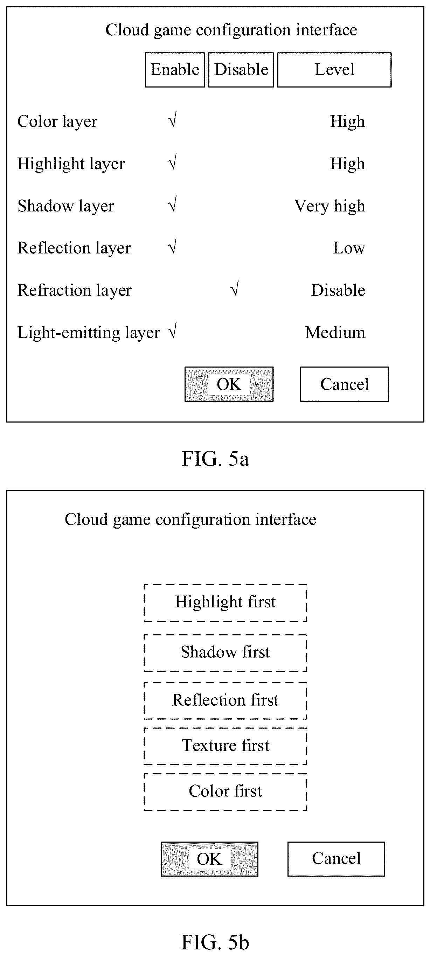

Specifically, the user 40 inputs, through the communication connection 30 and by using a client installed on the terminal device 20 or a browser that can access the cloud application, the image effect configuration instruction on an interface provided by the cloud application 101, to enable or disable the effect of the target rendering layer. For an embodiment in which the user inputs the configuration instruction, refer to FIG. 5a to FIG. 5d. FIG. 5a to FIG. 5d each are a diagram of an image effect configuration interface according to an embodiment of the present invention. As shown in FIG. 5a to FIG. 5d, in FIG. 5a, items that can be configured by the user on the image effect configuration interface include enabling or disabling a layer of image and effect levels of a layer of image, where the effect levels may be classified into very low, low, medium, high, very high, and the like. This is not limited in the present invention.

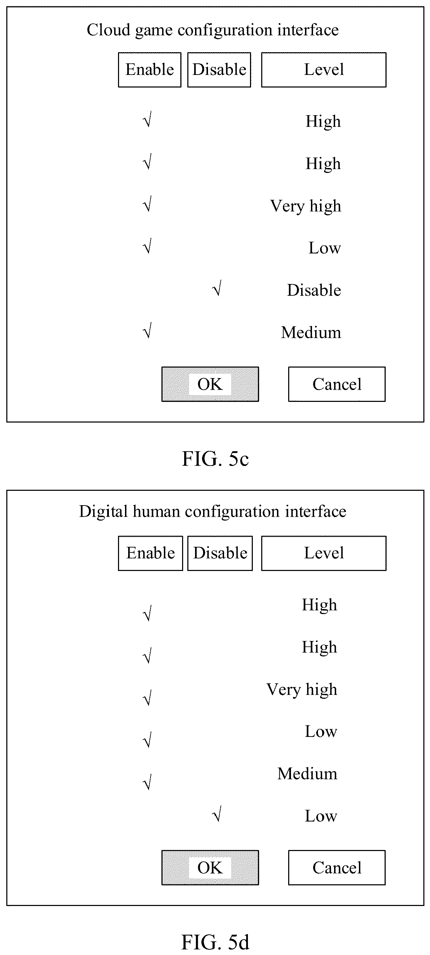

In another embodiment provided in the present invention, as shown in FIG. 5b, an item that can be configured by the user on the image effect configuration interface is image layer priority preference. For example, highlight first, shadow first, and the like may be selected. In FIG. 5c, image layers displayed on the image effect configuration interface may be classified based on image content, for example, classified into a player character, a non-player character, a water surface effect, a particle effect, the ground, and a ray. In another embodiment provided in the present invention, as shown in FIG. 5d, the cloud application 101 may be a digital human application, and image layers displayed on the image effect configuration interface may be classified into skin, eye, mouth shape, facial expression, hair, accessory, and the like based on image content. In this way, the user may enable or disable a corresponding rendering layer by clicking and selecting enable or disable, adjusting a level, setting a priority, or the like, to configure an expected image effect. This is not limited in the present invention.

Optionally, according to the video processing method and the video processing apparatus provided in embodiments of the present invention, the image effect configuration interface and an image effect configuration port are provided for the user in a form of a terminal-side application, a browser, or the like. The image effect configuration port is configured to receive the image effect configuration instruction sent by the user, so that a service side modifies a rendering configuration and an encoding configuration based on the image configuration instruction. Optionally, when usage of hardware resources such as a CPU and a graphics card on a user side is close to saturation, or a difference between network bandwidth and a required bit rate is already less than a threshold preset by a system or set by the user, the user attempts to send the image effect configuration instruction to enhance rendering quality of the highlight layer. However, when system resources are insufficient to support enhancement of the quality, the system estimates, according to the instruction, a resource occupation status or an actual image effect after the rendering quality of the highlight layer is enhanced, and displays the resource occupation status or the actual image effect on the configuration interface of the user in real time, for the user to determine whether to apply the configuration.

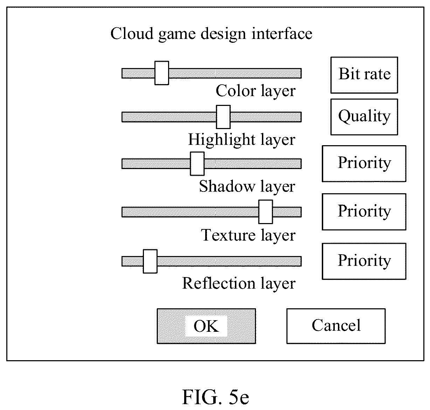

In another embodiment provided in the present invention, when designing the application, a developer of the application 101 may use the video processing system in FIG. 2 and the video processing method in FIG. 3 that are provided in embodiments of the present invention to assist in application design. For example, for an example of this embodiment of the present invention, refer to FIG. 5e. FIG. 5e is a diagram of a design interface that may be provided for an application developer. For example, when the application 101 is a cloud game, the developer of the cloud game may set different rendering and encoding priorities and rendering and encoding configurations for content of different layers during design, to ensure quality of content with a high priority. In addition, the developer may adjust rendering complexity and a rendering priority through instant debugging. For example, when layering is performed in a manner of background, character, special effect, and text, if the developer finds that rendering quality of a grassland of the background is low, because a video image presented by using the video processing method in this embodiment of the present invention has a characteristic of end-to-end intuitive feedback, in other words, indicates that texture complexity of the background layer is high or a rendering configuration or a rendering priority corresponding to the background layer is low, the developer may specifically reduce texture complexity of the image, or adjust the rendering configuration of the background layer, to avoid a case in which a problem cannot be intuitively located because images of all layers affect each other in encoding and transmission stages in related technologies. A control module 104 may collect statistics on data (for example, a bit rate, encoding complexity, and encoding image quality) of different content of different layers, so that the developer can refer to the data in cloud game design, to help the developer better analyze a problem. Optionally, the developer may provide an initial configuration or an optimal configuration. For example, the developer may fixedly set the color layer as a base layer and the texture layer as a first enhance layer, and the configuration cannot be changed by a game player through manual configuration. For another example, the developer may provide an initial priority of each rendering layer for reference by the game player. For example, a prompt of a recommended configuration may be provided when the player enters the game for the first time, and the player may be guided to apply the configuration with one click. A manner of providing the recommended configuration is not limited in this embodiment of the present invention.

S109: The terminal device 20 sends the image effect configuration instruction.

After receiving the configuration instruction from the user in step S108, the terminal device 20 sends the image effect configuration instruction to the service side device. The image effect configuration instruction instructs the rendering module to perform rendering based on the configuration, and may be specifically sent to the rendering module 102. In another embodiment provided in the present invention, the terminal device 20 may first send, to the control module 104 in the service side device 10, configuration information generated according to the effect configuration instruction in step S108, and then the control module 104 generates the image effect configuration instruction and sends the image effect configuration instruction to the rendering module 102. This is not limited in the present invention.

Optionally, in another embodiment provided in the present invention, the image effect configuration instruction may be generated by the control module based on resource status information. For example, the service side device 10 may generate a recommended initial image effect configuration for the user 40 based on resource status information such as a processor configuration of the terminal device 20, a bandwidth size and stability of the communication connection 30, or rendering and encoding capabilities of the service side device 10, or generate a recommended real-time image effect configuration during application running, and send the recommended real-time image effect configuration to the rendering module 102. This is not limited in the present invention.

S110: The rendering module 102 starts/stops, according to the image effect configuration instruction, rendering the target rendering layer.

Specifically, after receiving the image effect configuration instruction, the rendering module 102 starts rendering based on the image effect configuration. For example, if the image effect configuration instruction instructs to enable rendering of the highlight layer, the rendering module starts to perform rendering by using a renderer, a rendering parameter, a rendering channel, and the like that are related to the highlight layer, to generate a highlight layer of the image.

S111: The rendering module 102 starts/stops sending the target rendering layer.

For example, if receiving the image effect configuration instruction and performing rendering to generate the highlight layer, the rendering module 102 sends the highlight layer to the encoding module 103 for encoding in a next step. If receiving the image effect configuration instruction and stopping generating the highlight layer, the rendering module 102 also stops sending the highlight layer to the encoding module 103.

S112: The encoding module 103 starts/stops encoding an encoding layer corresponding to the target rendering layer.

Specifically, if the rendering module 102 starts to render the highlight layer and sends the highlight layer to the encoding module 103, the encoding module 103 starts to encode an encoding layer corresponding to the highlight layer. For example, if an encoding scheme of the encoding module is encoding one rendering layer into a corresponding encoding layer, the highlight layer is encoded into a base layer or an enhance layer. If an encoding scheme of the encoding module is encoding a plurality of rendering layers into a corresponding encoding layer, the highlight layer and another rendering layer are encoded into a base layer or an enhance layer.

S113: Collect the resource status information.

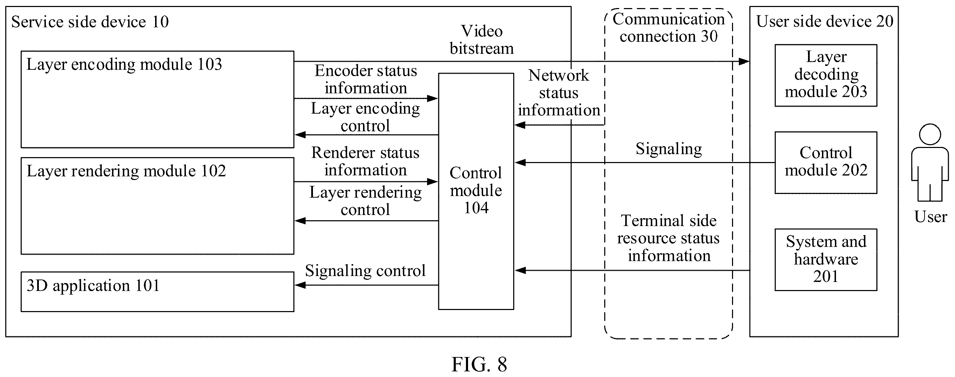

The control module 104 collects the resource status information. Specifically, the control module 104 may collect the resource status information from the following sources: an encoder in the encoding module 103 in the service side device 10, a rendering pipeline in the rendering module 102, a transmission network corresponding to the communication connection 30, the terminal device 20, and the like. For an architecture in which the control module 104 collects the resource status information from these modules, refer to the embodiment provided in FIG. 8. For example, the resource status information may include information such as an encoding bit rate, encoding complexity, an encoding content scenario, motion intensity, and layer encoding overheads from the encoder, may further include information such as rendering content complexity, a rendering content change, and a 3D application rendering manner from the rendering pipeline, may further include information such as real-time network bandwidth, network fluctuation, a packet loss rate, and a difference between bandwidth and a required bit rate from the transmission network, and may further include information such as CPU usage, layer decoding overheads, and layer decoding latency from the terminal device. In other words, the resource status information is information that reflects a running status of the video processing system including the user side and service side devices. It should be noted that, in another embodiment provided in the present invention, reference resource status information for configuring a layer rendering strategy and a layer encoding scheme by the control module includes one or more of the information in the foregoing example, and reference may also be made to other indicators that reflect software and hardware statuses and a network status of a current rendering and encoding system. This is not limited in the present invention.

S113a: Send resource status information from the terminal device.

Specifically, the terminal device 20 sends, to the control module 104 in the service side device 10, the resource status information from the terminal device. For example, the resource status information from the terminal device may include CPU usage, layer decoding overheads, layer decoding latency, and the like.

S113b: Send resource status information from the rendering pipeline.

Specifically, the rendering module 102 sends, to the control module 104 in the service side device 10, the resource status information from the rendering pipeline. For example, the resource status information from the rendering pipeline may include rendering content complexity, a rendering content change, a 3D application rendering manner, and the like.

S113c: Send resource status information from the transmission network.

Specifically, the communication connection 30 sends, to the control module 104 in the service side device 10, the resource status information from the transmission network. For example, the resource status information from the transmission network may include real-time network bandwidth, network fluctuation, a packet loss rate, a difference between bandwidth and a bit rate, and the like.

S113d: Send resource status information from the encoder.

Specifically, the encoding module 103 sends, to the control module 104 in the service side device 10, the resource status information from the encoder. For example, the resource status information from the encoder may include an encoding bit rate, encoding complexity, an encoding content scenario, motion intensity, layer encoding overheads, and the like.

S114: Determine, based on the resource status information, that a resource status can satisfy sending of at least m enhance layers.

Specifically, the control module 104 determines, based on the collected resource status information, that the current resource status of the video processing system can satisfy sending of at least m enhance layers.

For example, determining may be performed based on a bit rate or a difference between bandwidth and a required bit rate. When the bit rate fluctuates slightly, it may be determined that the at least m enhance layers can be sent for merging encoding layers in a next step. When the bit rate fluctuates greatly, it may be determined that the system cannot stably send m enhance layers. Consequently, enhance layers cannot be merged in a next step. The same logic applies when the difference between the bandwidth and the required bit rate is used for determining. If the bandwidth is continuously greater than the bit rate in a period of time, it may be determined that the at least m enhance layers can be sent for merging encoding layers in a next step.

For another example, determining may be performed based on encoding complexity. When the encoding complexity is high, it is determined that more resources are consumed, and a quantity of enhance layers that can be sent in a next step is reduced. For another example, determining may be performed based on a content scenario. When the currently running application 101 is a racing game, because an image of the racing game is rich in details, changes rapidly, and has a larger bit rate, correspondingly, a quantity of enhance layers that can be sent is smaller. When the currently running application 101 is document editing software, because the document editing software has more pure colors, fewer changes, and a lower bit rate, correspondingly, a quantity of enhance layers that can be sent is larger. For another example, determining may be performed based on rendering content complexity. For example, when a user side configuration requires that a frame rate be stable at 90 fps and a rendering capability of the service side device is constant, if the rendering complexity is high, a resource status may be insufficient to support rendering of m+2 enhance layers, but can support rendering of only m enhance layers. In this way, the control module 104 determines that the current resource status of the video processing system can satisfy sending of at least m enhance layers.

In conclusion, the control module 104 determines, based on the collected resource status information, that a current resource capability of each module in the system is sufficient to support sending of at least m enhance layers. Optionally, the control module 104 determines, by collecting statistics on changes of the resource status information in a specific duration, that the current resource capability of each module in the system is sufficient to support sending of at least m enhance layers in a long-term stable period of time.

S115: Send an encoding layer merging instruction.

Specifically, the control module 104 sends the encoding layer merging instruction to the encoding module 103, to indicate the encoding module 103 to merge the original base layer and the m enhance layers. In another embodiment provided by the present invention, when the control module 104 determines, based on the resource status information in step S114, that a current resource status cannot satisfy sending of at least m enhance layers but can satisfy sending of only at least n enhance layers, the control module 104 may send an encoding layer decomposition instruction in step S115 to instruct the encoding module to decompose the base layer obtained through merging into a new base layer and m-n enhance layers.

S116: Reconstruct the original base layer and the m enhance layers into a target base layer.

Specifically, after receiving the encoding layer merging instruction sent by the control module 104, the encoding module 103 reconstructs the original base layer and the m enhance layers into the target base layer, and uses the target base layer as a base layer for layer encoding. A remaining encoding layer is still used as an enhance layer. In comparison with a plurality of encoding layers before the merging, information redundancy is reduced in the base layer obtained through merging, so that the encoder sends only one necessary base layer and a few enhance layers in a long-term stable state, to reduce information entropy losses caused by layer rendering and layer encoding and save hardware and network resources.

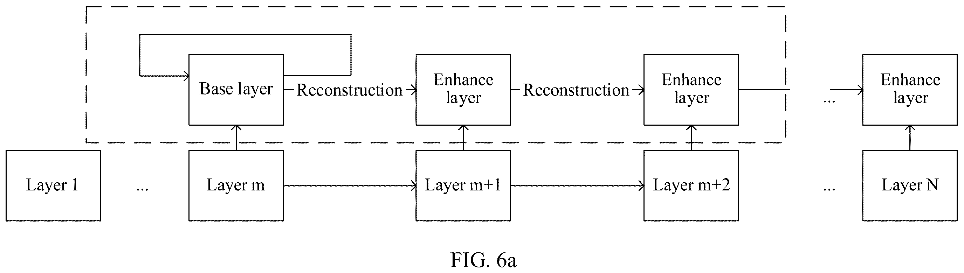

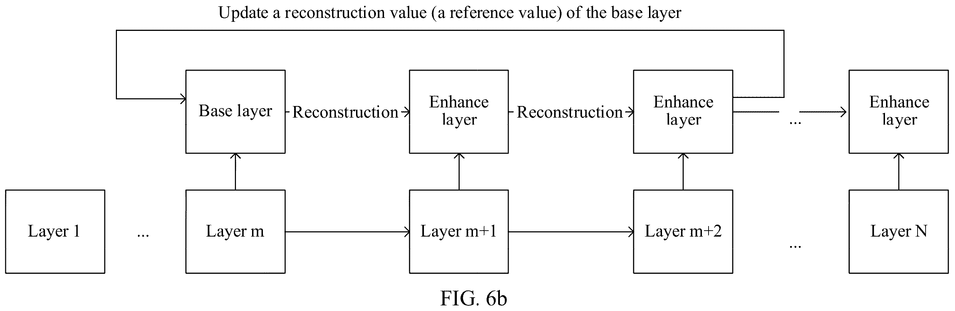

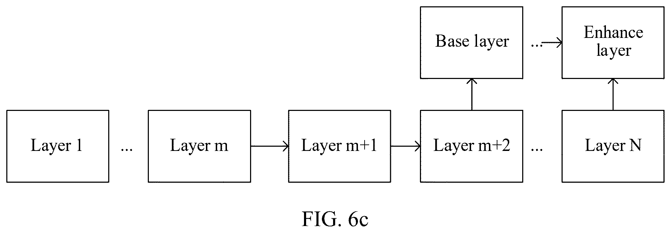

For an embodiment for reconstructing the original base layer and the plurality of enhance layers into the new base layer, refer to FIG. 6a to FIG. 6c. FIG. 6a to FIG. 6c each are a diagram of a method for reconstructing an original base layer and a plurality of enhance layers according to an embodiment of the present invention. As shown in the figure, steps of merging for layer encoding are as follows: First, as shown in FIG. 6a, a layer m, a layer m+1, and a layer m+2 are selected as a base layer and a plurality of enhance layers that need to be merged. Then, as shown in FIG. 6b, a reconstruction value of the last enhance layer, namely, the layer m+2, is used to refresh a reconstruction value of the base layer. Finally, as shown in FIG. 6c, the base layer is moved to a location of the last enhance layer, namely, the layer m+2, a rendering result corresponding to the layer is encoded into a base layer, and then a new video frame is encoded based on a new reconstruction value. Optionally, a decoding process is similar to an encoding process, except that merging and decomposition are performed only at an encoder layer, and no rendering part is involved. In a decomposition process, the base layer is directly moved forward gradually.

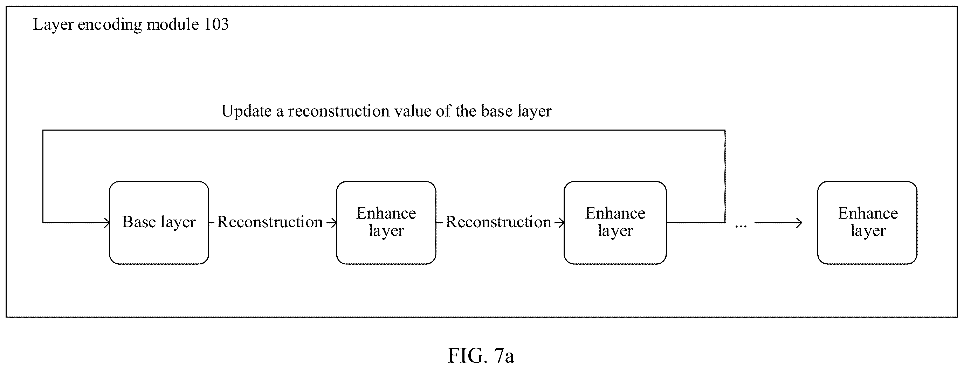

For an embodiment of the encoding module 103 configured to implement merging for layer encoding, refer to FIG. 7a. FIG. 7a is a diagram of an encoder in a video processing apparatus according to an embodiment of the present invention. As shown in FIG. 7a, specifically, in this embodiment, for example, the base layer is a color layer, and the enhance layers are a texture layer, a highlight layer, and a shadow layer. In this case, the color layer obtained through rendering may be encoded by using a general-purpose encoder in the related technologies. A residual between the texture layer and the color layer that are obtained through rendering is obtained by subtracting the color layer from the texture layer. After the residual is added to the color layer, the color layer may be encoded into a first enhance layer in the encoding layer. An encoder of the first enhance layer is a private encoder. In other words, a non-fully compliant video encoder and the private encoder are used for implementation, where the non-fully compliant video encoder needs to update a reconstruction value, and the private encoder is configured to compress the residual. Optionally, the residual may be compressed in a lossless manner, or may be compressed in an image compression manner in the related technologies.

When the control module 104 determines, based on the resource status information, that the color layer, the texture layer, and the highlight layer need to be merged in the layer encoding, the enhance layer corresponding to the highlight layer needs to be used to update the reconstruction value of the base layer in the encoding process, and an updated reconstruction value of the base layer is used as a reference value of the base layer in the encoding process, and is used as a reference value for encoding of a next frame.

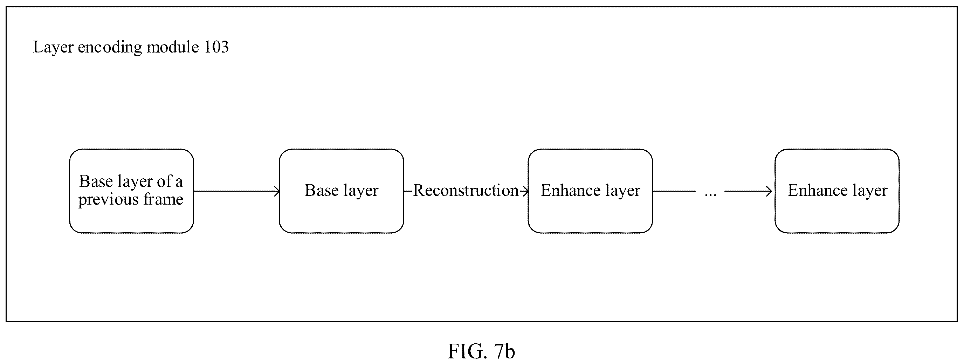

For another embodiment of the encoding module 103 configured to implement merging for layer encoding, refer to FIG. 7b. FIG. 7b is a diagram of an encoder in a video processing apparatus according to an embodiment of the present invention. As shown in FIG. 7b, specifically, in this embodiment, when the color layer and the texture layer need to be merged, a frame obtained through merging directly uses a base layer of a previous frame as a reference value of the base layer, in other words, directly uses the encoding layer corresponding to the highlight layer of a previous layer as the reference value of the base layer to perform inter prediction. This manner is simple in encoding implementation, and may be implemented by using a compliant video encoder and a private encoder.

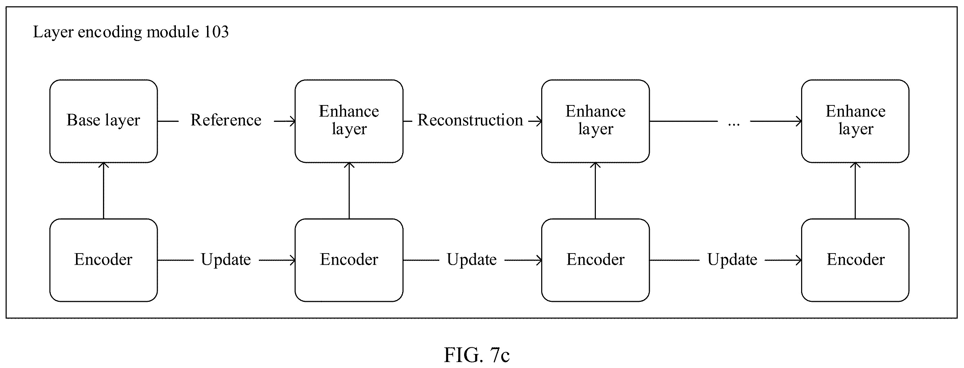

For another embodiment of the encoding module 103 configured to implement merging for layer encoding, refer to FIG. 7c. FIG. 7c is a diagram of an encoder in a video processing apparatus according to an embodiment of the present invention. As shown in FIG. 7c, specifically, in this embodiment, the color layer, the texture layer, the highlight layer, and the shadow layer that are obtained through rendering are all encoded by using the video encoder. In other words, each rendering layer is considered as a video frame for encoding, the color layer is used as a first frame, the texture layer is used as a second frame, and the highlight layer is used as a third frame. In this way, the layer encoding may be implemented based on a fully compliant video encoder and private outer layer scheduling. An encoder of the enhance layer is consistent with an encoder of a previous layer. When the control module 104 determines to merge a plurality of encoding layers, the enhance layer directly uses a previous layer to encode a video frame of a next layer, and refreshes a reference value of the base layer by using an enhance layer bitstream obtained through encoding. An encoder side may set a motion vector to 0 and accelerate the encoding process through fixed block division.

S117: Send a video bitstream.

Specifically, the encoding module 103 sends the encoded video bitstream to the terminal device 20 on the user side through the communication connection 30, where the video bitstream includes the encoding layer obtained through merging. Optionally, after the video bitstream is decoded by a decoder of the terminal device 20, the video image can be displayed on a display device included in the terminal device 20.

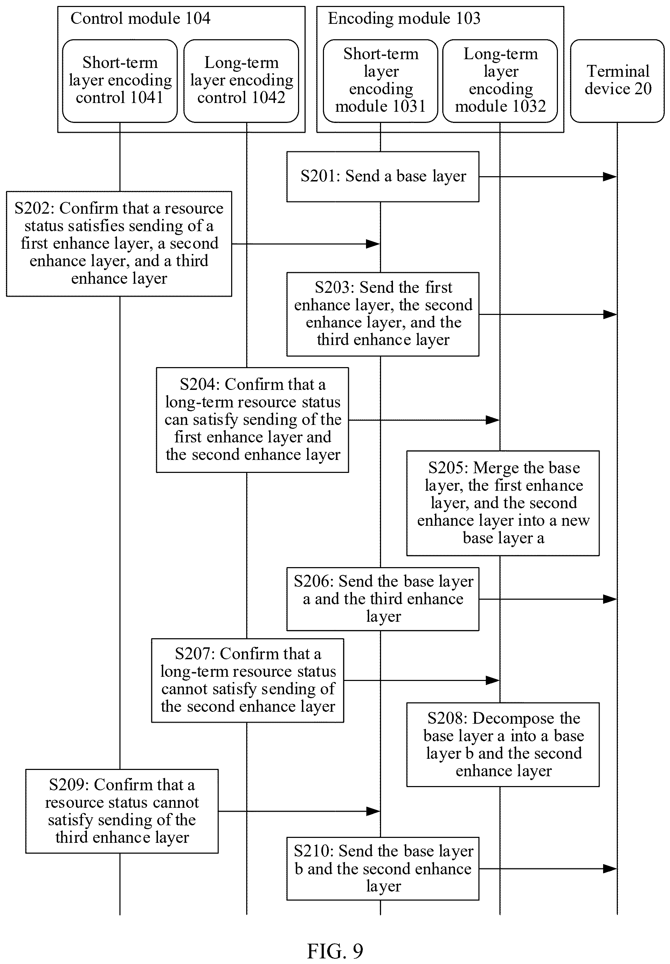

FIG. 9 is a flowchart of a video processing method according to an embodiment of the present invention. As shown in FIG. 9, in an embodiment of the present invention, a control module may include a short-term layer encoding control module 1041 and a long-term layer encoding control module 1042, and an encoding module 103 may include a short-term layer encoding module 1031 and a long-term layer encoding module 1032.

The short-term layer encoding module 1031 is configured to: control sending of frame-level encoded data and collect statistics on resource status information. First, a multi-layer bitstream input by the encoding module 103 is received, and a base layer is sent to a transport layer. Then, whether to send a next enhance layer is determined with reference to the foregoing real-time or statistical resource status information, and this step is repeated until an enhance layer cannot be sent. In addition, optionally, statistics on real-time information such as a quantity of sent enhance layers, a difference between bandwidth and a required bit rate, and encoding complexity of an encoder are collected, and a fluctuation coefficient is calculated based on the information, and is sent to the long-term layer encoding module 1032 for reference.

The long-term layer encoding module 1032 is configured to control generation and allocation of the enhance layer and the base layer. When long-term bandwidth can stably support the base layer and one or more enhance layers, a module that controls layering in the long-term layer encoding module 1032 merges the base layer and the enhance layer into a new base layer, to improve encoding efficiency and ensure encoding stability. When long-term bandwidth cannot stably support the base layer and one or more enhance layers or the fluctuation coefficient is large, a module that controls layering disassembles the base layer into a new base layer and a new enhance layer until a base layer can satisfy a requirement. In addition, optionally, for an enhance layer and a rendering layer that are not to be used, the long-term layer encoding module 1032 may stop a rendering pipeline in advance and control a quantity of enhance layers, to save rendering computing power.

In an embodiment provided in the present invention, the long-term layer encoding module 1032 can receive a predefined template configured by a developer of an application 101. For example, the predefined template may be used to configure information like a layer rendering manner of content of the application, and based on the information, an entire system can be controlled to generate most suitable initial rendering and encoding configurations. In addition, optionally, the long-term layer encoding module 1032 can collect statistics on long-term stability information of the system in a period of time, for example, resource overheads such as bit rates and computing power needed by different enhance layers, and perform adjustment by using an adaptive control module, to achieve an overall optimal effect. In addition, the information may be further provided for a user side for reference, so that the user can participate in system adjustment, to achieve better subjective experience.

The embodiment in FIG. 9 shows a schematic flowchart of a method in which the control module 104 indicates the encoding module 103 to perform encoding layer merging and decomposition. A procedure of the video processing method includes the following steps:

S201: Send the base layer.

Specifically, the short-term layer encoding module 1031 in the encoding module 103 sends the base layer to a terminal device 20.

S202: Confirm that a resource status satisfies sending of a first enhance layer, a second enhance layer, and a third enhance layer.

Specifically, the short-term layer encoding control module 1041 in the control module 104 confirms, based on real-time resource information such as network bandwidth, that three enhance layers can be sent currently, and notifies the short-term layer encoding module 1031.

S203: Send the first enhance layer, the second enhance layer, and the third enhance layer.

Specifically, the short-term layer encoding control module 1041 in the control module 104 indicates the short-term layer encoding module 1031 to send the first enhance layer, the second enhance layer, and the third enhance layer.

S204: Confirm that a long-term resource status can satisfy sending of the first enhance layer and the second enhance layer.

Specifically, the long-term layer encoding control module 1042 in the control module 104 determines, by collecting statistics on long-term stable resource status information of each module in the system, that the long-term resource status can satisfy the sending of the first enhance layer and the second enhance layer, and notifies the long-term layer encoding module 1032. For example, a current resource status may fluctuate, and a minimum value of the fluctuation of the resource status may satisfy the sending of the first enhance layer and the second enhance layer, but cannot satisfy long-term stable sending of the third enhance layer. Optionally, real-time adjustment is performed on the third enhance layer by the short-term layer encoding control module based on a network bandwidth status, and whether the third enhance layer can be sent is determined.

S205: Merge the base layer, the first enhance layer, and the second enhance layer into a new base layer a.

Specifically, the long-term layer encoding control module 1042 indicates the long-term layer encoding module 1032 to merge the base layer, the first enhance layer, and the second enhance layer into the new base layer a. For an embodiment of the merging, refer to FIG. 6a, FIG. 6b, FIG. 6c, FIG. 7a, FIG. 7b, and FIG. 7c.

S206: Send the base layer a and the third enhance layer.

Specifically, the long-term layer encoding module 1032 sends the base layer a obtained through merging and the third enhance layer to the terminal device 20.

S207: Confirm that a long-term resource status cannot satisfy sending of the second enhance layer.

Specifically, the long-term layer encoding control module 1042 determines that the long-term resource status cannot satisfy the sending of the second enhance layer, and notifies the long-term layer encoding module 1032. In other words, the long-term layer encoding control module 1042 determines, based on the long-term stable resource status information in the system in a period of time, that the long-term resource status of the system cannot satisfy the sending of the second enhance layer.

S208: Decompose the base layer a into a base layer b and the second enhance layer.

Specifically, the long-term layer encoding control module 1042 disassembles the base layer a into the base layer b and the second enhance layer. Optionally, the original base layer and the enhance layer may be reconstructed into the base layer b and the second enhance layer.

S209: Confirm that a resource status cannot satisfy sending of the third enhance layer.

Specifically, the short-term layer encoding control module 1041 in the control module 104 confirms that the resource status cannot satisfy the sending of the third enhance layer, and notifies the short-term layer encoding module 1031 in the encoding module 103.

S210: Send the base layer b and the second enhance layer.

Specifically, the short-term layer encoding module 1031 in the encoding module 103 sends the base layer b and the second enhance layer to the terminal device 20.

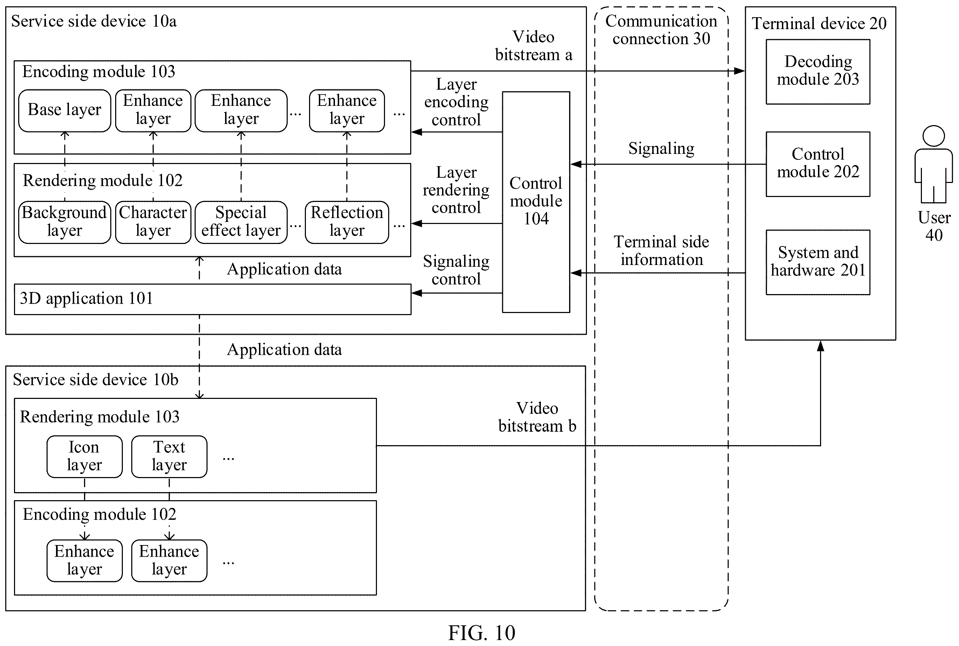

FIG. 10 is a diagram of an architecture of a video processing system according to an embodiment of the present invention. As shown in FIG. 10, in an embodiment of the present invention, the video processing system is implemented in an edge cloud collaboration manner. The video processing system includes a service side device 10a and a service side device 10b. In other words, the service side device 10 in the video processing system shown in FIG. 2 includes the service side device 10a and the service side device 10b. The service side device 10a is provided by one or more cloud data centers, and the service side device 10b is provided by one or more edge cloud devices. An edge cloud is a technology that deploys a cloud computing capability closer to a data source or a user. A difference between the edge cloud and a public cloud lies in a deployment location, a service object, resource management, and an application scenario. The edge cloud can provide a service nearby at an edge node, to reduce network latency and jitter and improve a response speed and quality of the service, and can perform, at the edge node, processing such as filtering, compression, and aggregation on data, to reduce a data transmission amount, save network bandwidth and traffic, and reduce network costs.

In a scenario provided in this embodiment of the present invention, an application 101 is a character fighting game. A rendering layer of the game includes a background layer, a character layer, a special effect layer, a reflection layer, an icon layer, and a text layer. Specifically, the background layer may be a background where characters fight each other, for example, a grassland or a beach, the special effect layer may be a special effect when a character in a fight uses a skill, the reflection layer may be reflection effects of objects such as a character and a weapon, and the icon layer and the text layer may be used to display game prompts, character names, player conversations, and the like.

In this embodiment, raw model data that is generated by the application and that is used for rendering may be separately distributed to the service side device 10a and the service side device 10b for rendering. For example, the background layer, the character layer, the special effect layer, and the reflection layer may be rendered, encoded, and transmitted by the service side device 10a, and the icon layer and the text layer may be rendered, encoded, and transmitted by the service side device 10b. Because content of the icon layer and the text layer is mostly high-frequency information, rendering complexity of the content is lower than encoding complexity and transmission complexity of the content. In other words, the content needs low computing power but high bandwidth. In this case, edge cloud collaboration is used to render and encode the part of information on an edge device. With better network quality and lower transmission bandwidth of the edge device, the information is encoded with higher quality, so that image quality of content on a terminal side is greatly improved, and a pain point of poor quality of information such as a text is resolved.

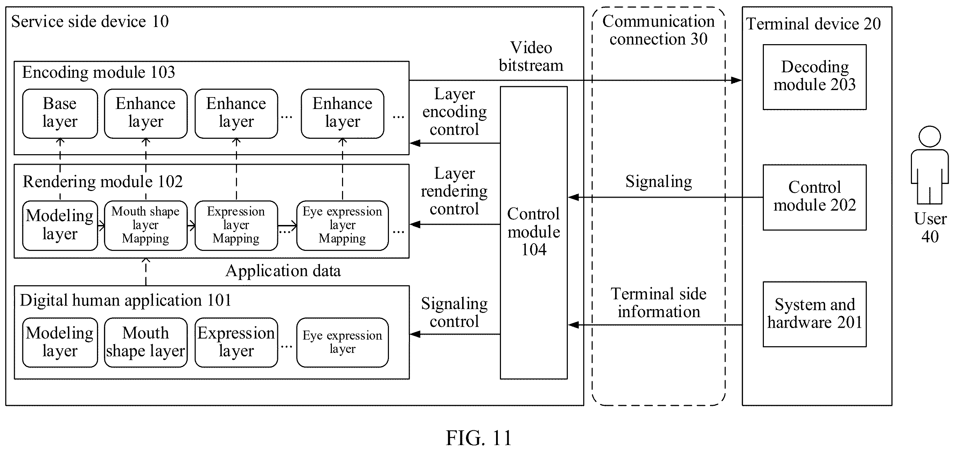

FIG. 11 is a diagram of an architecture of a video processing system according to an embodiment of the present invention. As shown in FIG. 11, in an embodiment provided in the present invention, a cloud application 101 is specifically a digital human application 101. The digital human application 101 can generate, by using an artificial intelligence (artificial intelligence, AI) inference technology, a virtual avatar that simulates human appearance, expressions, voices, and language, and can perform multi-modal interaction and services in different scenarios. In this embodiment, the digital human application 101 generates raw data such as a mouth shape, a face, and eye contact by using technologies such as voice driving and key point generation. The raw data may include a dynamic effect and location information of the part, and is transmitted to a rendering pipeline in a rendering module 102 for mapping to perform layer rendering. Optionally, the digital human application 101 and the rendering module 102 may be implemented by using a same software module.

In an embodiment provided in the present invention, a layering manner in layer encoding and layer rendering in the video processing method may be two-level layering. For example, when the cloud application 101 is a cloud game, first-level layers may be a background layer, a character layer, a special effect layer, a reflection layer, an icon layer, and a text layer, and second-level layers may be a color layer, a texture layer, a highlight layer, a shadow layer, and the like. That is, each first-level layer can further include a second-level layer. For example, a game developer may set the background layer and the character layer in the first-level layers as base layers, and the color layer in the second-level layers as a base layer. In this case, a color layer in the background layer and a color layer in the character layer are both rendered with a high priority, and the priority cannot be reduced by a user. In this way, scalability of each layer in the video processing method provided in this embodiment of the present invention is improved.

In another embodiment provided in the present invention, the video processing method and the video processing system provided in this embodiment of the present invention may be applied to fields such as cloud gaming/remote gaming/online gaming, a digital human service, cloud rendering/remote rendering/online rendering, and cloud film production/remote film production/online film production. An application scenario is not limited in the present invention.

In conclusion, in embodiments of the present invention, layer encoding may be performed by using content obtained through layer rendering, to avoid mutual impact between content of different layers during full-frame encoding, match rendering quality and encoding quality, reduce resource waste, and enhance image stability. In comparison with a conventional video processing solution, a coupling degree between different content is reduced, so that when complexity of a piece of content increases, quality of other content does not fluctuate sharply. Further, a rendering effect set by the user may be fed back to an encoding phase and penetrate into a rendering part. In addition, dynamic scaling may be further performed on an encoding layer based on a current resource status of the video processing system, to save resources, reduce information redundancy caused by layer rendering and layer encoding, and improve user experience as a whole while improving rendering quality and encoding quality.

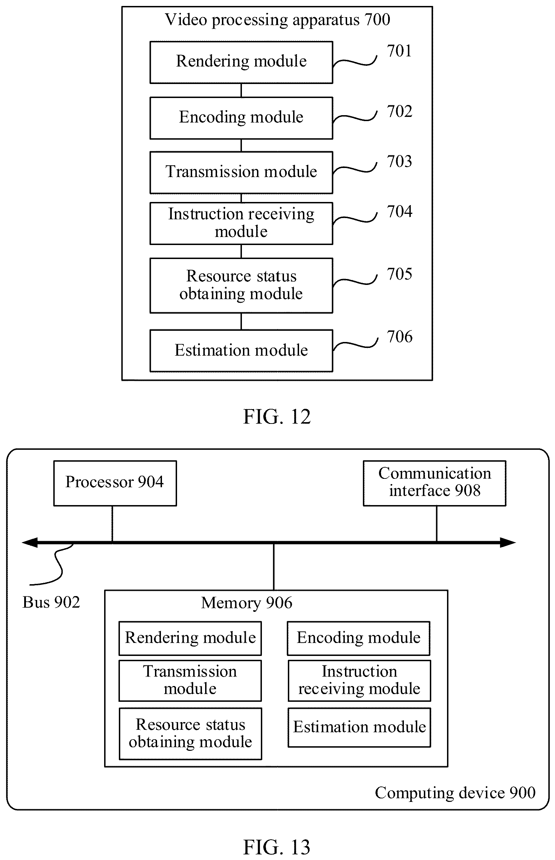

FIG. 12 is a diagram of a structure of a video processing apparatus according to an embodiment of the present invention. The video processing apparatus 700 may be implemented as a part or all of a video processing server by using software, hardware, or a combination thereof. Refer to FIG. 12. The video processing apparatus 700 includes: a rendering module 701, an encoding module 702, a transmission module 703, an instruction receiving module 704, a resource status obtaining module 705, and an estimation module 706.

The rendering module 701 is configured to perform rendering to generate raw video data, where the raw video data is obtained by rendering raw model data corresponding to the raw video data, the raw model data is generated by the cloud application according to an application operation instruction sent by a terminal device through the communication connection, the raw video data includes M rendering layers, and M≥2.

The encoding module 702 is configured to encode the M rendering layers in the raw video data into i encoding layers, to generate a target video bitstream, where a first part of rendering layers in the M rendering layers are encoded into a first encoding layer, a second part of rendering layers in the M rendering layers are encoded into a second encoding layer, ..., and an i^{th} part of rendering layers in the M rendering layers are encoded into an i^{th} encoding layer; and M≥i≥1.

The transmission module 703 is configured to: send the target video bitstream to the terminal device; and send resource occupation information and/or image effect information to the terminal device.

The instruction receiving module 704 is configured to: receive an image effect configuration instruction, where the image effect configuration instruction is used to enable/disable an effect of a target rendering layer in the M rendering layers; and receive an image effect configuration instruction, where the image effect configuration instruction is used to enhance/weaken an effect of a target rendering layer in the M rendering layers.

The resource status obtaining module 705 is configured to: obtain resource status information, where the resource status information indicates a status of one or more of the following: a rendering pipeline, an encoder, the communication connection, and the terminal device; and determine, based on the resource status information, that a resource status can satisfy sending of at least m original enhance layers, where m≤i-1.

The estimation module 706 is configured to estimate resource occupation information and/or image effect information according to the image effect configuration instruction, where the resource occupation information is used to describe a resource occupation status of the terminal device or the communication connection after the raw video data is encoded according to the image effect configuration instruction, and the image effect information is used to describe an image effect displayed on the terminal device after the raw video data is encoded according to the image effect configuration instruction.

The rendering module, the encoding module, the transmission module, the instruction receiving module, the resource status obtaining module, and the estimation module may all be implemented by using software, or may be implemented by using hardware. For example, the following uses the rendering module as an example to describe an implementation of the rendering module. Similarly, for implementations of a video receiving module, a video decoding module, an information obtaining module, a policy determining module, and a video sending module, refer to the implementation of the rendering module.

A module is used as an example of a software functional unit, and the rendering module may include code run on a computing instance. The computing instance may include at least one of a physical host (a computing device), a virtual machine, and a container. Further, there may be one or more computing instances. For example, the rendering module may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed on a same virtual private cloud (virtual private cloud, VPC), or may be distributed on a plurality of VPCs. Usually, one VPC is disposed in one region. A communication gateway needs to be disposed in each VPC for communication between two VPCs in a same region and cross-region communication between VPCs in different regions. The VPCs are interconnected through the communication gateway.

A module is used as an example of a hardware functional unit, and the rendering module may include at least one computing device, for example, a server. Alternatively, a module may be a device or the like that is implemented by using an application-specific integrated circuit (application-specific integrated circuit, ASIC) or a programmable logic device (programmable logic device, PLD). The PLD may be implemented by using a complex programmable logical device (complex programmable logical device, CPLD), a field-programmable gate array (field-programmable gate array, FPGA), a generic array logic (generic array logic, GAL), or any combination thereof.

A plurality of computing devices included in the rendering module may be distributed in a same region, or may be distributed in different regions. The plurality of computing devices included in the rendering module may be distributed in a same AZ, or may be distributed in different AZs. Similarly, the plurality of computing devices included in the rendering module may be distributed on a same VPC, or may be distributed on a plurality of VPCs. The plurality of computing devices may be any combination of computing devices such as a server, an ASIC, a PLD, a CPLD, an FPGA, and a GAL.

It should be noted that, in another embodiment, the rendering module may be configured to perform any step in the video processing method, the encoding module, the transmission module, the instruction receiving module, the resource status obtaining module, and the estimation module may also be configured to perform any step in the video processing method, and steps implemented by the rendering module, the encoding module, the transmission module, the instruction receiving module, the resource status obtaining module, and the estimation module may be specified as required. The rendering module, the encoding module, the transmission module, the instruction receiving module, the resource status obtaining module, and the estimation module respectively implement different steps in the video processing method, to implement all functions of the video processing apparatus.

In this embodiment of the present invention, in a video processing process, layer encoding may be performed by using content obtained through layer rendering, to avoid mutual impact between content of different layers during full-frame encoding, match rendering quality and encoding quality, reduce resource waste, and enhance image stability. In comparison with a conventional video processing solution, a coupling degree between different content is reduced, so that when complexity of a piece of content increases, quality of other content does not fluctuate sharply. In addition, dynamic scaling may be further performed on an encoding layer based on a current resource status of a video processing system, to save resources, reduce information redundancy caused by layer rendering and layer encoding, and improve user experience as a whole while improving rendering quality and encoding quality. It should be noted that when the video processing apparatus provided in the foregoing embodiment processes video data, division of the foregoing function modules is used only as an example for description. In actual application, the foregoing functions may be allocated to different function modules for implementation as required, in other words, an inner structure of the apparatus is divided into different function modules to implement all or a part of the functions described above. In addition, the video processing apparatus provided in the foregoing embodiment and the video processing method embodiments belong to a same concept. For a specific implementation process of the video processing apparatus, refer to the method embodiments for details. Details are not described herein again.

FIG. 13 is a diagram of a structure of a computing device according to an embodiment of the present invention. The computing device 900includes a bus 902, a processor 904, a memory 906, and a communication interface 908. The processor 904, the memory 906, and the communication interface 908 communicate with each other through the bus 902. A quantity of processors and a quantity of memories in the computing device 900 are not limited in this embodiment of the present invention.

When technical solutions provided in embodiments of the present invention are implemented, the computing device 900 may be a server that executes a video processing task.

The bus 902 may be a peripheral component interconnect (peripheral component interconnect, PCI) bus, an extended industry standard architecture (extended industry standard architecture, EISA) bus, or the like. The bus may be divided into an address bus, a data bus, a control bus, and the like. To facilitate representation, the bus is represented by using only one line in FIG. 13, but it does not indicate that there is only one bus or one type of buses. The bus 902 may include a path for information transfer between various components (for example, the memory 906, the processor 904, and the communication interface 908) of the computing device 900.

The processor 904 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 906 may include a volatile memory (volatile memory), for example, a random access memory (random access memory, RAM). The processor 904 may further include a non-volatile memory (non-volatile memory), for example, a read-only memory (read-only memory, ROM), a flash memory, a hard disk drive (hard disk drive, HDD), or a solid state drive (solid state drive, SSD).

In this embodiment of the present invention, the memory 906 stores executable program code, and the processor 904 executes the executable program code to separately implement functions of a video receiving module 801, a video decoding module 802, an information obtaining module 803, a policy determining module 804, a video processing module 805, and a video sending module 806, to implement the video processing method shown in FIG. 2. That is, the memory 906 stores instructions used to perform the video processing method shown in FIG. 2. It should be noted that, in FIG. 13, only an example in which the memory 906 stores program code of the video processing method shown in FIG. 3 is used as an example for description.

The communication interface 908 uses a transceiver module, for example, but not limited to, a network interface card or a transceiver, to implement communication between the computing device 900 and another device or a communication network.

An embodiment of the present invention further provides a computing device cluster. The computing device cluster includes at least one computing device. The computing device may be a server, for example, a central server, an edge server, or a local server in a local data center. In some embodiments, the computing device may alternatively be a terminal device like a desktop computer, a notebook computer, or a smartphone.

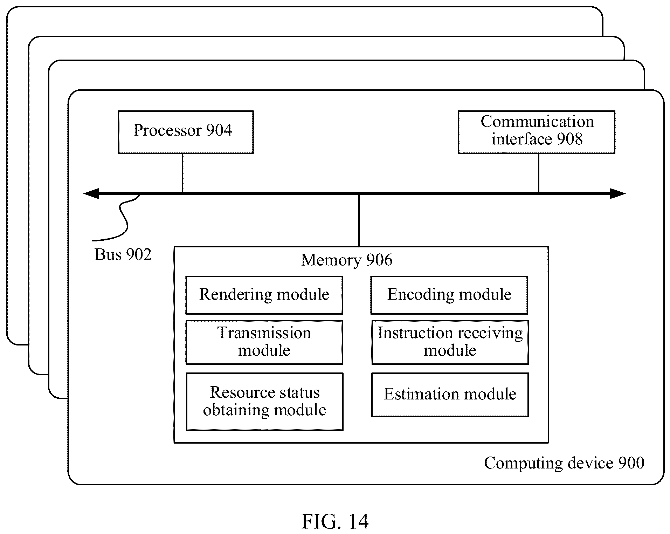

As shown in FIG. 14, the computing device cluster includes at least one computing device 900. A memory 906 in one or more computing devices 900 in the computing device cluster may store same instructions used to perform the video processing method shown in FIG. 3.

In some possible implementations, the memory 906 in the one or more computing devices 900 in the computing device cluster may separately store some instructions used to perform the video processing method. In other words, a combination of the one or more computing devices 900 may jointly execute instructions used to perform the video processing method shown in FIG. 2.

It should be noted that memories 906 in different computing devices 900 in the computing device cluster may store different instructions, to separately perform some functions of a video processing apparatus. In other words, the instructions stored in the memories 906 in the different computing devices 900 may implement functions of one or more of the foregoing rendering module, encoding module, transmission module, instruction receiving module, resource status obtaining module, and estimation module.

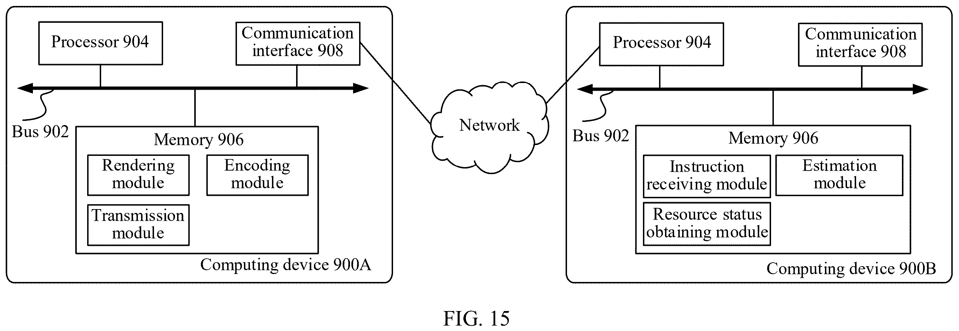

In some possible implementations, the one or more computing devices in the computing device cluster may be connected through a network. The network may be a wide area network, a local area network, or the like. FIG. 15 shows a possible implementation. As shown in FIG. 15, two computing devices 900A and 900B are connected to each other through a network. Specifically, each computing device is connected to the network through a communication interface in the computing device.

An example in which a computing device cluster implements a video processing method shown in FIG. 15 is used. In an implementation shown in FIG. 15, a memory 906 in the computing device 900A stores instructions for executing functions of a rendering module, an encoding module, and a transmission module. In addition, a memory 906 in the computing device 900B stores instructions for executing functions of an instruction receiving module, a resource status obtaining module, and an estimation module.

For a connection manner between computing device clusters shown in FIG. 15, considering that a large amount of video data may need to be processed in the video processing method provided in the present invention, a plurality of functions are considered to be implemented in different computing devices, and functions implemented by the instruction receiving module 704, the estimation module 706, and the resource status obtaining module 705 are performed by the computing device 900B, to reduce a calculation amount of the computing device 900A.

It should be understood that functions of the computing device 900A shown in FIG. 15 may alternatively be completed by a plurality of computing devices 900. Similarly, functions of the computing device 900B may alternatively be completed by a plurality of computing devices 900.

An embodiment of the present invention further provides another computing device cluster. For a connection relationship between computing devices in the computing device cluster, refer to the connection manners in the computing device clusters in FIG. 11 and FIG. 15 similarly. A difference lies in that a memory 906 in one or more computing devices 900 in the computing device cluster may store same instructions used to perform the video processing method.

In some possible implementations, the memory 906 in the one or more computing devices 900 in the computing device cluster may separately store some instructions used to perform the video processing method. In other words, a combination of the one or more computing devices 900 may jointly execute the instructions used to perform the video processing method.

An embodiment of the present invention further provides a computer program product including instructions. The computer program product may be software or a program product that includes the instructions and that can run on a computing device or be stored in any usable medium. When the computer program product runs on at least one computing device, the at least one computing device is enabled to perform the video processing method shown in FIG. 3.

An embodiment of the present invention further provides a computer-readable storage medium. The computer-readable storage medium may be any usable medium that can be stored in a computing device, or a data storage device like a data center including one or more usable media. The usable medium may be a magnetic medium (for example, a floppy disk, a hard disk drive, or a magnetic tape), an optical medium (for example, a DVD), a semiconductor medium (for example, a solid state drive), or the like. The computer-readable storage medium includes instructions, and the instructions instruct the computing device to perform the video processing method shown in FIG. 3.

It should be understood that "a plurality of" mentioned in this specification means two or more. In descriptions of embodiments of the present invention, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists. In addition, to clearly describe the technical solutions in embodiments of the present invention, words such as "first" and "second" are used in embodiments of the present invention to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and a signal in embodiments of the present invention are used under authorization by the user or full authorization by all parties, and collection, use, and processing of related data need to conform to related laws, regulations, and standards of related countries and regions.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of the present invention.

## Claims

1. A video processing method, applied to a video processing apparatus, wherein the video processing apparatus and a cloud application are disposed in at least one data center, a communication connection is established between the at least one data center and a terminal device, and the method comprises:
performing rendering to generate raw video data, wherein the raw video data is obtained by rendering raw model data corresponding to the raw video data, the raw model data is generated by the cloud application according to an application operation instruction sent by the terminal device through the communication connection, the raw video data comprises M rendering layers, and M≥2;
encoding the M rendering layers in the raw video data into i encoding layers, to generate a target video bitstream, wherein a first part of rendering layers in the M rendering layers are encoded into a first encoding layer, a second part of rendering layers in the M rendering layers are encoded into a second encoding layer, ..., and an i^{th} part of rendering layers in the M rendering layers are encoded into an i^{th} encoding layer; and M≥i≥1; and
sending the target video bitstream to the terminal device.

2. The method according to claim 1, wherein the first part of rendering layers are a first rendering layer in the M rendering layers, the second part of rendering layers are a second rendering layer in the M rendering layers, ..., and the i^{th} part of rendering layers are an i^{th} rendering layer in the M rendering layers; and the method further comprises:
receiving an image effect configuration instruction, wherein the image effect configuration instruction is used to enable/disable an effect of a target rendering layer in the M rendering layers; and
the performing rendering to generate the raw video data comprises:
starting/stopping, according to the image effect configuration instruction, rendering the target rendering layer, to start/stop encoding an encoding layer corresponding to the target rendering layer.

3. The method according to claim 1, wherein the method further comprises:
receiving an image effect configuration instruction, wherein the image effect configuration instruction is used to enhance/weaken an effect of a target rendering layer in the M rendering layers; and
the performing rendering to generate the raw video data comprises:
improving/reducing, according to the image effect configuration instruction, quality of rendering the target rendering layer.

4. The method according to any one of claims 1 to 3, wherein the first encoding layer in the i encoding layers is an original base layer, another encoding layer in the i encoding layers is an original enhance layer, and the method further comprises:
obtaining resource status information, wherein the resource status information indicates a status of one or more of the following: a rendering pipeline, an encoder, the communication connection, or the terminal device;
determining, based on the resource status information, that a resource status can satisfy sending of at least m original enhance layers, wherein m≤i-1; and
reconstructing the original base layer and the m original enhance layers into a target base layer, wherein a first bitstream comprises a bitstream corresponding to the target base layer.

5. The method according to claim 4, wherein after the reconstructing the original base layer and the m original enhance layers into the target base layer, the method further comprises:
determining that a resource status cannot satisfy sending of the at least m original enhance layers but can satisfy sending of at least n original enhance layers, wherein n<m;
reconstructing the original base layer and the n original enhance layers into the target base layer; and
stopping rendering an (n+2)^{th} rendering layer, an (n+3)^{th} rendering layer, ..., and an (m+1)^{th} rendering layer.

6. The method according to any one of claims 2 to 5, wherein the method further comprises:
estimating resource occupation information and/or image effect information according to the image effect configuration instruction, wherein the resource occupation information is used to describe a resource occupation status of the terminal device or the communication connection after the raw video data is encoded according to the image effect configuration instruction, and the image effect information is used to describe an image effect displayed on the terminal device after the raw video data is encoded according to the image effect configuration instruction; and
sending the resource occupation information and/or the image effect information to the terminal device.

7. A video processing method, applied to a video processing apparatus, wherein the method comprises:
receiving a target video bitstream, wherein the target video bitstream is generated by performing encoding on raw video data, the raw video data comprises M rendering layers, the target video bitstream comprises at least one encoding layer, the at least one encoding layer comprises a base layer and/or at least one enhance layer, an i^{th} encoding layer in the target video bitstream is obtained by encoding a part of rendering layers in the M rendering layers, M≥2, and M≥i≥1; and
decoding the i^{th} encoding layer into the part of rendering layers corresponding to the i^{th} encoding layer, to decode the target video bitstream.

8. The method according to claim 7, wherein the method further comprises:
sending resource status information, wherein the resource status information is used to determine that a resource status can satisfy sending of at least m original enhance layers, m≤M-1, the resource status information comprises status information of a terminal device, and the status information of the terminal device comprises one or more of the following: CPU usage, layer decoding overheads, and layer decoding latency.

9. A video processing apparatus, wherein the video processing apparatus and a cloud application are disposed in at least one data center, a communication connection is established between the at least one data center and a terminal device, and the video processing apparatus comprises:
a rendering module, configured to perform rendering to generate raw video data, wherein the raw video data is obtained by rendering raw model data corresponding to the raw video data, the raw model data is generated by the cloud application according to an application operation instruction sent by the terminal device through the communication connection, the raw video data comprises M rendering layers, and M≥2;
an encoding module, configured to encode the M rendering layers in the raw video data into i encoding layers, to generate a target video bitstream, wherein a first part of rendering layers in the M rendering layers are encoded into a first encoding layer, a second part of rendering layers in the M rendering layers are encoded into a second encoding layer, ..., and an i^{th} part of rendering layers in the M rendering layers are encoded into an i^{th} encoding layer; and M≥i≥1; and
a transmission module, configured to send the target video bitstream to the terminal device.

10. The apparatus according to claim 9, wherein the first part of rendering layers are a first rendering layer in the M rendering layers, the second part of rendering layers are a second rendering layer in the M rendering layers, ..., and the i^{th} part of rendering layers are an i^{th} rendering layer in the M rendering layers; and the apparatus further comprises:
an instruction receiving module, configured to receive an image effect configuration instruction, wherein the image effect configuration instruction is used to enable/disable an effect of a target rendering layer in the M rendering layers; and
the rendering module is further configured to:
start/stop, according to the image effect configuration instruction, rendering the target rendering layer, to start/stop encoding an encoding layer corresponding to the target rendering layer.

11. The apparatus according to claim 9, wherein the apparatus further comprises:
an instruction receiving module, configured to receive an image effect configuration instruction, wherein the image effect configuration instruction is used to enhance/weaken an effect of a target rendering layer in the M rendering layers; and
the rendering module is further configured to:
improve/reduce, according to the image effect configuration instruction, quality of rendering the target rendering layer.

12. The apparatus according to any one of claims 9 to 11, wherein the first encoding layer in the i encoding layers is an original base layer, another encoding layer in the i encoding layers is an original enhance layer, and the apparatus further comprises:
a resource status obtaining module, configured to: obtain resource status information, wherein the resource status information indicates a status of one or more of the following: a rendering pipeline, an encoder, the communication connection, and the terminal device; and determine, based on the resource status information, that a resource status can satisfy sending of at least m original enhance layers, wherein m≤i-1; and
the encoding module is further configured to:
reconstruct the original base layer and the m original enhance layers into a target base layer, wherein a first bitstream comprises a bitstream corresponding to the target base layer.

13. The apparatus according to claim 12, wherein:
the resource status obtaining module is further configured to determine, after the encoding module reconstructs the original base layer and the m original enhance layers into the target base layer, that a resource status cannot satisfy sending of the at least m original enhance layers but can satisfy sending of at least n original enhance layers, wherein n<m;
the encoding module is further configured to:
reconstruct the original base layer and the n original enhance layers into the target base layer; and
the rendering module is further configured to:
stop rendering an (n+2)^{th} rendering layer, an (n+3)^{th} rendering layer, ..., and an (m+1)^{th} rendering layer.

14. The apparatus according to any one of claims 10 to 13, wherein the apparatus further comprises:
an estimation module, configured to estimate resource occupation information and/or image effect information according to the image effect configuration instruction, wherein the resource occupation information is used to describe a resource occupation status of the terminal device or the communication connection after the raw video data is encoded according to the image effect configuration instruction, and the image effect information is used to describe an image effect displayed on the terminal device after the raw video data is encoded according to the image effect configuration instruction; and
the transmission module is further configured to:
send the resource occupation information and/or the image effect information to the terminal device.

15. A video processing apparatus, wherein the apparatus comprises:
a receiving module, configured to receive a target video bitstream, wherein the target video bitstream is generated by performing encoding on raw video data, the raw video data comprises M rendering layers, the target video bitstream comprises at least one encoding layer, the at least one encoding layer comprises a base layer and/or at least one enhance layer, an i^{th} encoding layer in the target video bitstream is obtained by encoding a part of rendering layers in the M rendering layers, M≥2, and M≥i≥1; and
a decoding module, configured to decode the i^{th} encoding layer into the part of rendering layers corresponding to the i^{th} encoding layer, to decode the target video bitstream.

16. The apparatus according to claim 15, wherein the apparatus further comprises:
a sending module, configured to send resource status information, wherein the resource status information is used to determine that a resource status can satisfy sending of at least m original enhance layers, m≤M-1, the resource status information comprises status information of a terminal device, and the status information of the terminal device comprises one or more of the following: CPU usage, layer decoding overheads, and layer decoding latency.

17. A cloud application system, wherein the cloud application system comprises a cloud application, a rendering apparatus, and an encoding apparatus, and the cloud application, the rendering apparatus, and the encoding apparatus are disposed in at least one data center, wherein
the cloud application is configured to generate model data;
the rendering apparatus is configured to render the model data to generate raw video data, wherein the raw video data comprises M rendering layers, and M≥2; and
the encoding apparatus is configured to encode the M rendering layers in the raw video data into i encoding layers, wherein M≥i≥1, to generate a target video bitstream.

18. A computing device cluster, wherein the computing device cluster comprises at least one computing device, and each computing device comprises a processor and a memory, wherein
a processor of the at least one computing device is configured to execute instructions stored in a memory of the at least one computing device, to enable the computing device cluster to perform the video processing method according to any one of claims 1 to 6 or the video processing method according to claim 7 or 8.

19. A computer program product comprising instructions, wherein when the instructions are run by a computing device cluster, the computing device cluster is enabled to perform the video processing method according to any one of claims 1 to 6 or the video processing method according to claim 7 or 8.

20. A computer-readable storage medium, comprising computer program instructions, wherein when the computer program instructions are executed by a computing device cluster, the computing device cluster performs the video processing method according to any one of claims 1 to 6 or the video processing method according to claim 7 or 8.
